# EUROPEAN PATENT SPECIFICATION

(11) **EP 2 611 161 B1**
(45) Date of publication and mention of the grant of the patent: **31.08.2016**
(21) Application number: 12184610.9
(22) Date of filing: 17.09.2012
(51) Int. Cl.: H04N 13/00, H04N 13/04, H04N 21/43

(54) **Signal processing device for processing plurality of 3D content, display device for displaying the content, and methods thereof**
Signalverarbeitungsvorrichtung zur Verarbeitung einer Mehrzahl von 3D-Inhalten, Anzeigevorrichtung zur Anzeige des Inhaltes und Verfahren davon
Dispositif de traitement de signaux pour traiter plusieurs contenus 3D, dispositif d'affichage pour afficher le contenu et procédés associés

(30) Priority: 28.12.2011 KR 20110144365; 28.12.2011 KR 20110145280; 30.12.2011 KR 20110147291; 30.12.2011 KR 20110147502; 23.05.2012 KR 20120054864
(43) Date of publication of application: 03.07.2013
(73) Proprietor: Samsung Electronics Co., Ltd., Suwon-si, Gyeonggi-do, 443-742 (KR)
(72) Inventor: Choo, Jin-ho, Seongnam-si Gyeonggi-do (KR); Kim, Tae-sung, Seongnam-si Gyeonggi-do (KR); Choi, Hak-hun, Gumi-si Gyeongsangbuk-do (KR); Kim, Jung-min, Seongnam-si Gyeonggi-do (KR); Kim, Hyeong-gil, Suwon-si Gyeonggi-do (KR); Jung, Choon-sik, Hwaseong-si Gyeonggi-do (KR); Cho, Soon-jae, Suwon-si Gyeonggi-do (KR); Hahm, Cheul-hee, Seongnam-si Gyeonggi-do (KR)
(74) Representative: Appleyard Lees IP LLP

(56) References cited:
- US-A1- 2010 007 582
- US-A1- 2011 169 919

## Description

### BACKGROUND

### 1. Field

Apparatuses and methods consistent with exemplary embodiments relate to a signal processing device, a display device, and methods thereof, and more particularly to a signal processing device for processing a plurality of content, a display device for displaying the content, and methods thereof.

### 2. Description of the Related Art

With the development of electronic technology, various types of electronic devices have been developed. In particular, various kinds of display devices, such as televisions (TV), mobile phones, personal computers (PC), notebook PCs, and personal digital assistants (PDA), have been widely used even at residencies.

As the use of the display devices is increased, user needs for more diverse functions have been increased. Accordingly, in order to meet such user needs, products having new functions have been developed.

Accordingly, diverse kinds of content to be processed in the display devices have been provided. In particular, content having large data sizes, such as high-resolution content and three-dimensional (3D) content, have been recently provided.

Further, there have been efforts to develop display devices which can simultaneously provide a plurality of content and enable a plurality of users to view different content. In the case of such display devices, lots of resources, such as memories and buses, are required in comparison to a case where one kind of content is processed and displayed, and, thus, the video processing may not be performed smoothly.

Particularly, in the case where a plurality of content having large data sizes, such as 3D content, are to be combined and displayed, far more resources are required. Thus, it may be difficult to implement such a multi-view display.

Accordingly, there has been a need for a technology that can display a multi-view effectively by processing of a plurality of content.

US 2011/0169919 describes systems and methods that relate to frame formatting supporting mixed two and three dimensional video data communication. For example, frames in frame sequence(s) may be formatted to indicate that a first screen configuration is to be used for displaying first video content, that a second screen configuration is to be used for displaying second video content, and so on. The screen configurations may be different or the same. In another example, the frames in the frame sequence(s) may be formatted to indicate that the first video content is to be displayed at a first region of a screen, that the second video content is to be displayed at a second region of the screen, and so on. The regions of the screen may partially overlap, fully overlap, not overlap, be configured such that one or more regions are within one or more other regions, etc.

US 2010/0007582 describes an apparatus for interfacing with a display screen. The apparatus includes a frame. The frame includes (a) a pair of shutter lenses, (b) a light coupled to the frame; and (b) a circuit integrated with the frame to control the pair of shutter lenses and control the light coupled to the frame. The circuit is configured to communicate with a display device to enable synchronization of the shutter lenses and the display device. The light is analyzed to determine position of the frame relative to the display device, and the position is used to cause an adjustment in display output when viewed from the perspective of the position of the frame.

### SUMMARY

Exemplary embodiments may address at least the above problems and/or disadvantages and other disadvantages not described above and to provide at least the advantages described below.

Accordingly, one or more exemplary embodiments provides a signal processing device for processing a plurality of content, a display device for displaying the content, and methods thereof.

As described herein, according to various exemplary embodiments, multiple users can view different content through one display device.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become more apparent by describing certain exemplary embodiments, with reference to the accompanying drawings, in which:
FIG. 1 is a block diagram illustrating the configuration of a display device according to an exemplary embodiment;
FIG. 2 is a diagram explaining a method for providing different 3D content to a plurality of users;
FIG. 3 is a diagram explaining examples of a method for reducing data sizes of a plurality of 3D content to process the 3D content with the reduced data sizes;
FIG. 4 is a diagram explaining examples of a method for reducing data sizes of a plurality of 3D content to process the 3D content with the reduced data sizes;
FIGS. 5A, 5B, and 5C are diagrams explaining a frame rate conversion process for one 3D content;
FIG. 6 is a diagram illustrating an example of a method for configuring multi-content frame data through combination of a plurality of 3D content;
FIG. 7 is a block diagram illustrating the configuration of a signal processing device according to an exemplary embodiment;
FIG. 8 is a block diagram illustrating the configuration of a signal processing device according to an exemplary embodiment;
FIG. 9 is a flowchart illustrating a 3D multi-content display method according to an exemplary embodiment;
FIG. 10 is a flowchart illustrating a 3D multi-content display method according to an exemplary embodiment;
FIG. 11 is an exemplary diagram illustrating a system for providing a plurality of content to a plurality of users according to an exemplary embodiment;
FIG. 12 is a block diagram of a display device that is used in the system of FIG. 11;
FIG. 13 is a block diagram of a signal processing unit that is used in the display device of FIG. 12;
FIGS. 14A and 14B are exemplary diagrams illustrating relative arrangement positions of video frames of first content and second content on the basis of an output sync;
FIG. 15 is a flowchart of a multi-view display method according to an exemplary embodiment;
FIG. 16 is a schematic diagram illustrating the configuration of a content providing system according to an exemplary embodiment;
FIG. 17 is a schematic diagram illustrating the configuration of a content providing system according to an exemplary embodiment;
FIG. 18 is a block diagram illustrating the configuration of a display device that is used in the system illustrated in FIGS. 16 and 17;
FIG. 19 illustrates key frames of respective content having different frame rates;
FIG. 20 illustrates a method for integrating key frames of respective content having different frame rates;
FIG. 21 illustrates an example of integrated key frames of respective content having different frame rates;
FIGS. 22A, 22B, 22C, 22D, and 22E are diagrams illustrating examples of integrating key frames of respective content having different frame rates;
FIG. 23 is a block diagram illustrating the detailed configuration of the display device of FIG. 18;
FIG. 24 is a block diagram illustrating the configuration of a glasses device used in the system illustrated in FIGS. 16 and 17;
FIG. 25 is a flowchart illustrating a content providing method of a display device according to an exemplary embodiment;
FIG. 26 is a block diagram illustrating the configuration of a display device according to an exemplary embodiment;
FIG. 27 is a diagram illustrating a 3D multi-view mode for displaying a plurality of 3D content;
FIG. 28 is a diagram illustrating a 2D multi-view mode for displaying a plurality of 2D content;
FIG. 29 is a block diagram illustrating an example of the configuration of one SoC;
FIG. 30 is a block diagram illustrating an example of the detailed configuration of a display device;
FIG. 31 is a block diagram illustrating the configuration of a display device according to an exemplary embodiment; and
FIG. 32 is a flowchart illustrating a display method according to an exemplary embodiment.

### DETAILED DESCRIPTION OF EXEMPLARY EMBODIMENTS

Hereinafter, certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since that would obscure the description with unnecessary detail.

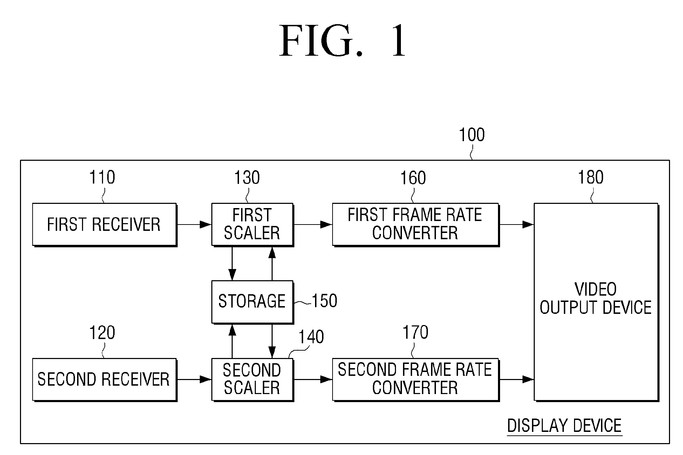

FIG. 1 is a block diagram illustrating the configuration of a display device according to an exemplary embodiment. Referring to FIG. 1, a display device 100 includes first and second receivers 110 and 120, first and second scalers 130 and 140, a storage 150, first and second frame rate converters 160 and 170, and a video output device 180. The display device 100 of FIG. 1 may be implemented by a device having a display unit, such as a TV, a mobile phone, a PDA, a notebook PC, a monitor, a tablet PC, an electronic book, a digital photo frame, a kiosk, and a personal medical device.

The first and second receivers 110 and 120 receive content from different sources. The sources may be broadcasting stations that transmit broadcasting program content using a broadcasting network, web servers that transmit content files using the Internet, or various kinds of recording medium reproduction devices connected to the display device 100. The recording medium reproduction device means a device that reproduces content stored in various types of recording media, such as a CD, a DVD, a hard disk, a blu-ray disk, a memory card, and a USB memory.

In an exemplary embodiment, in which content is received from a broadcasting station, the first and second receivers 110 and 120 may be implemented to include the configurations, such as a tuner, a demodulator, an equalizer, and a decoder (not illustrated). In an exemplary embodiment, in which content is received from a source such as a web server, the first and second receivers 110 and 120 may be implemented by network interface cards (not illustrated). Further, in an exemplary embodiment, in which content is received from the various kinds of recording medium reproduction devices as described above, the first and second receivers 110 and 120 may be implemented by interface units (not illustrated) connected to the recording medium reproduction device. As described above, the first and second receivers 110 and 120 may be implemented by diverse forms according to exemplary embodiments.

Further, it is not necessary for the first and second receivers 110 and 120 to receive the content from the same type of sources, and the first receiver 110 and the second receiver 120 may receive the content from different types of sources. For example, the first receiver 110 may be implemented in a form that includes a tuner, a demodulator, an equalizer, and a decoder, and the second receiver 120 may be implemented by a network interface card.

The first and second scalers 130 and 140 reduce data sizes of respective content received in the first and second receivers 110 and 120, and store the respective content with the reduced data sizes in the storage 150. If an output time of the content stored in the storage 150 has arrived, the first and second scalers 130 and 140 read and provide the corresponding content to the first and second frame rate converters 160 and 170.

The data size reduction operation may be performed in various ways according to exemplary embodiments. For example, the first and second scalers 130 and 140 may perform downscaling of the respective content to reduce the sizes of the content, and then store the downscaled content in the storage 150.

The first and second scalers 130 and 140 may perform downscaling of the respective content, reduce the frame rates of the content, and then store the content with the reduced frame rates in the storage 150.

Further, the first and second scalers 130 and 140 may perform the downscaling of the respective content, store the downscaled content in the storage 150, and then reduce the frame rates of the read content to provide the content with the reduced frame rates to the first and second frame rate converters 160 and 170 when the respective stored content are read according to the output timing.

Particularly, if the 3D content are 3:2 pull-down film video content, the first and second scalers 130 and 140 may downscale the film video content, extract key frames only, and store the extracted key frames in the storage 150.

In addition, the first and second scalers 130 and 140 may perform the downscaling of the content, and convert the downscaled content into data formats corresponding to the configurations of the first and second frame rate converters 160 and 170, respectively. Specifically, in the case where input data is in a top-to-bottom format while the first and second frame rate converters 160 and 170 process frames in a side-by-side format, the first and second scalers 130 and 140 separate left-eye images and right-eye images of the respective content, and connect the separated images side by side in a horizontal direction to convert the content into the side-by-side format.

The data format conversion work may be done before the downscaled content is stored in the storage 150 or after the content is read from the storage 150.

As described above, if the first and second scalers 130 and 140 reduce the data size of the content and store the content with the reduced data size, the capacity of the storage 150 can be reduced, and the amount of buses for connecting the storage 150, the first and second scalers 130 and 140, the first and second frame rate converters 160 and 170, and the like, can also be reduced. As a result, the resources can be minimized.

The first and second frame rate converters 160 and 170 convert the frame rates of the respective content provided from the first and second scalers 130 and 140 to match the multi-content display rate with reference to the output rate of the display device 100. Specifically, if the display device 100 operates at 60 Hz, the first and second frame rate converters 160 and 170 convert the frame rates of the respective content into 120 Hz. On the other hand, in the case where only the key frames are read and stored in the storage 150 with respect to the film video content as described above, the corresponding frame rate converters 160 and 170 convert the frame rates of the respective 3D content into a frame rate corresponding to the video output device 180 through interpolation of the frames based on the key frames read from the storage 150.

The video output device 180 combines and displays the respective content output from the first and second frame rate converters 160 and 170. Specifically, the video output device 180 multiplexes the respective content provided from the first and second frame rate converters 160 and 170 so that the video frames of the respective content are alternately arranged at least one by one, configures multi-content frame data through upscaling of the multiplexed data to suit the screen size, and then displays the multi-content frame data. The multi-content frame data means frame data that is configured so that a plurality of users can view a plurality of content, respectively. A method of configuring multi-content frame data may be implemented diversely according to the driving method of the display device.

For example, in the case of a shutter glasses type display device, the video output device 180 configures the multi-content frame data through alternate arrangement of video frames of the first content and video frames of the second content at least one by one, and displays the multi-content frame data. Users wear glasses devices interlocking with the display timing of the video output device 180 to view the content desired by the users. Specifically, the glasses device is composed of a left-eye shutter glass and a right-eye shutter glass. The left-eye shutter glass and the right-eye shutter glass are alternately turned on/off when viewing the 3D content, while they are collectively turned on/off according to the output timing of the content synchronized with the glasses device when a plurality of content are displayed. Accordingly, an individual user can view the content separately from other users.

As another example, in the case of a non-glasses type display device, the video output device 180 configures at least one multi content frame data by dividing the first and second content into a plurality of lines and alternately combining the divided lines. The video output device 180 displays the multi-content frame data using a display panel (not illustrated) that is provided with a parallax barrier or a lenticular lens, and thus enables users to view frames of different content, respectively.

Although FIG. 1 illustrates the configuration that receives and processes two kinds of content, an exemplary embodiment that receives and processes three or more kinds of content may be implemented. In this case, three or more receivers, scalers, and frame rate converters may be provided, respectively.

As described above, a mode in which the multi-content frame data is configured and displayed may be called a multi-view mode (or a dual-view mode). In the case of a normal mode (or a single-view mode) in which only one of 2D content and 3D content is displayed, the display device 100 may activate only one of the first and second receivers 110 and 120 to process the content. Even in the normal mode, various data size reduction processes as described above may be done to reduce the resource utilization amount. If a user selects a multi-view mode in a state where the display device 100 operates in a normal mode, the display device 100 activates the remaining receiver to process the data in the above-described manner.

On the other hand, the above-described content may be 2D content or 3D content. 3D content means content that enables a user to experience 3D effects using a multi-viewpoint image that expresses the same object from different viewpoints.

In order to configure multi-content frames using a plurality of 3D content, the video output device 180 multiplexes left-eye images and right-eye images included in the respective 3D content that are provided from the first and second frame rate converters 160 and 170, and alternately arranges the multiplexed images according to a predetermined arrangement order. Further, the video output device 180 configures the multi-content frames through upscaling of the multiplexed data to suit the screen size.

Accordingly, the left-eye image and the right-eye image of the first content and the left-eye image and the right-eye image of the second content are sequentially arranged and displayed according to the predetermined arrangement order, and the user can view the left-eye image and the right-eye image of one kind of content through the glasses device.

Although not illustrated in FIG. 1, the display device 100 further includes a configuration that differently provides audio data included in the respective content for the respective users when the display device 100 operates in the multi-view mode. That is, the display device 100 may further include a demultiplexer (DEMUX) (not illustrated) that separates audio data from the content received by the respective receivers 110 and 120, audio decoders (not illustrated) that decode the separated audio data, respectively, a modulation unit (not illustrated) that modulates the decoded audio data into different frequency signals, and an output unit (not illustrated) that transmits the respective modulated audio data to the glasses devices. The respective audio data output from the output unit are provided to the users through output means such as earphones provided on the glasses devices.

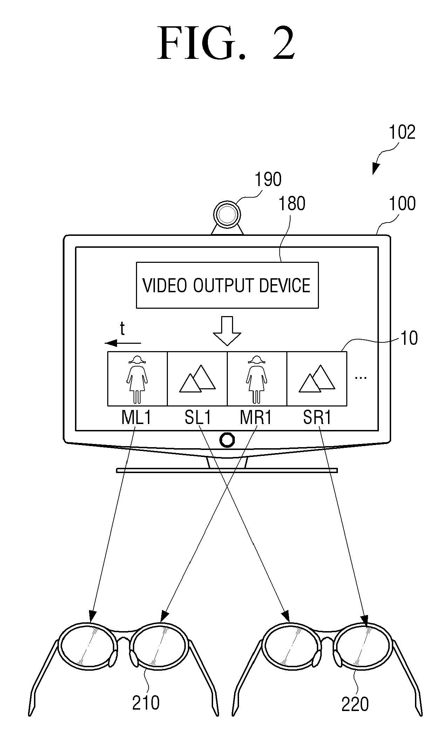

FIG. 2 is a diagram explaining the operation of a shutter glasses type display apparatus 102 that displays multi-content frames using a plurality of 3D content.

Referring to FIG. 2, the display device 100 includes a signal transmission unit 190. The signal transmission unit 190 transmits a synchronization signal that synchronizes the different 3D glasses devices with the output timing of the left-eye images and the right-eye images while the video output device 180 displays the multi-content frames 10 including the left-eye images and the right-eye images which constitute the plurality of 3D content.

The synchronization signal may be generated and transmitted in various forms. As an example, the signal transmission unit 190 may generate a plurality of IR (Infra Red) synchronization signals or RF (Radio Frequency) synchronization signals having different frequencies and provide the generated synchronization signals to the respective glasses devices.

Further, the signal transmission unit 190 may generate the synchronization signals according to various kinds of radio communication standards such as Bluetooth, and transmit the generated synchronization signals to the first and second glasses devices 210 and 220. For this, the glasses devices perform pairing with the display device 100. If the pairing is completed, information on the respective glasses devices, for example, device identifications (ID) and the like, may be registered in the display device. The signal transmission unit 190 may match the glasses device information with the display timing of the respective content, and generate and transmit one synchronization signal according to the communication standard.

Although the signal transmission unit 190 is illustrated to project to the outside of the display device 100 in FIG. 2, it may be built in the display device 100 according to an exemplary embodiment that transmits the synchronization signal according to the radio communication standard.

If the synchronization signal is received, the respective glasses devices 210 and 220 may confirm the display timing corresponding to their own glasses device information and turn on or off the left-eye shutter glass and the right-eye shutter glass according to the confirmed display timing. In addition, the synchronization signal may be generated in various ways.

The respective glasses devices 210 and 220 individually turn on/off the left-eye shutter glass and the right-eye shutter glass according to the synchronization signal. Specifically, when the left-eye image ML1 of main 3D content is displayed, the first glasses device 210 for viewing the main 3D content turns on the left-eye shutter glass and turns off the right-eye shutter glass, while when the right-eye image MR1 of the main 3D content is displayed, it turns on the right-eye shutter glass and turns off the left-eye shutter glass. By contrast, when the left-eye image SL1 and the right-eye image SR1 of sub 3D content are displayed, the first glasses device 210 turns off both the left-eye shutter glass and the right-eye shutter glass. When the left-eye image ML1 and the right-eye image MR1 of the main 3D content are displayed, the second glasses device 220 turns off both the left-eye shutter glass and the right-eye shutter glass.

Accordingly, a user who wears the first glasses device 210 can view the main 3D content, and a user who wears the second glasses device 220 can view the sub 3D content.

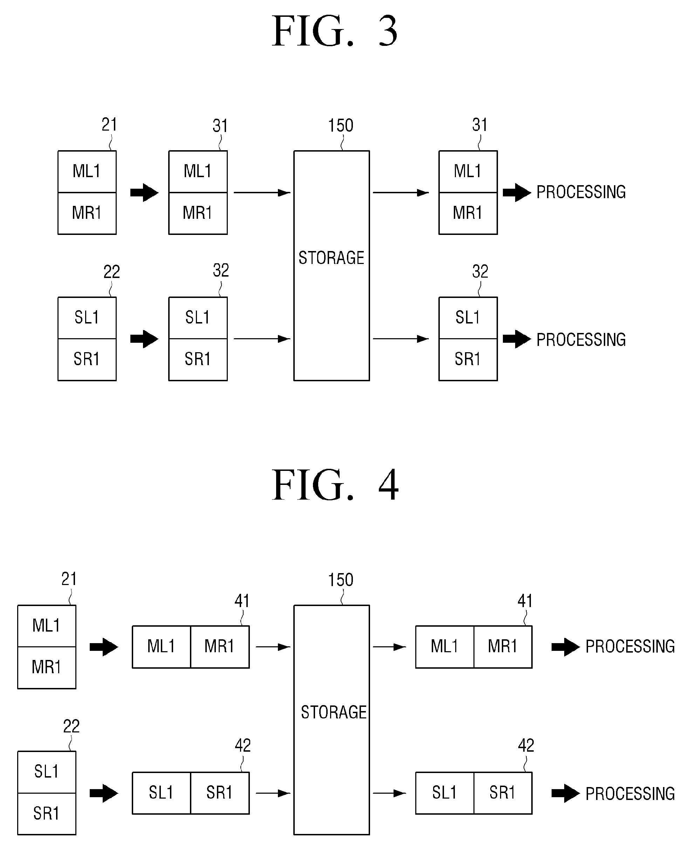

FIG. 3 is a diagram explaining an example of a process of reducing the data sizes of the 3D content and storing the 3D content with the reduced data sizes. Referring to FIG. 3, if the main 3D content 21 and the sub 3D content 22 are received, the data sizes of the main 3D content and the sub 3D content are reduced by the first and second scalers 130 and 140, and the reduced main 3D content 31 and the reduced sub 3D content 32 with the reduced data sizes are stored in the storage 150. The stored content 31 and 32 are read according to the output timing and are displayed with their frame rates converted. The first and second scalers 130 and 140 may perform downscaling only or perform downscaling and frame reduction, and then store the corresponding content in the storage 150. FIG. 3 shows a state where the left-eye images and the right-eye images of the main 3D content 21 and the sub 3D content 22 are received in a top-to-bottom format and are processed as they are.

FIG. 4 is a diagram illustrating another example of a process of reducing the data sizes and storing the 3D content with the reduced data sizes. Referring to FIG. 4, if the main 3D content 21 and the sub 3D content 22 in the top-to-bottom format are received, the data sizes thereof are reduced by the first and second scalers 130 and 140, and the main 3D content and the sub 3D content are converted into a side-by-side main 3D content 41 and sub 3D content 42 to be stored in the storage 150. The stored content 41 and 42 are read according to the output timing and are provided to the first and second frame rate converters 160 and 170. The first and second frame rate converters 160 and 170 perform the frame rate conversion operation with respect to the content data with the reduced sizes. Accordingly, resources used to convert the frame rates can be minimized.

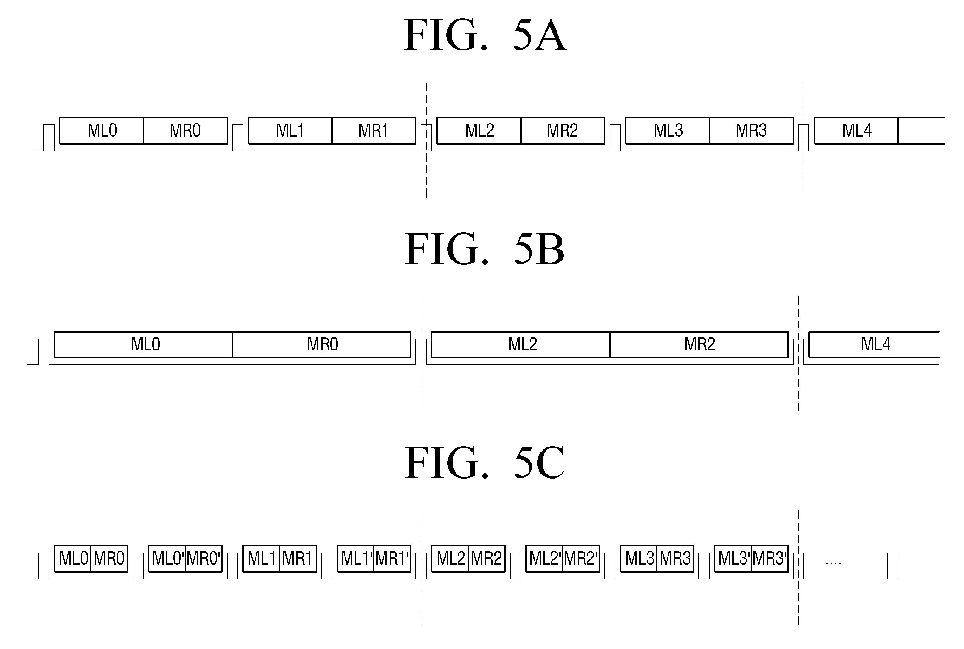

FIGS. 5A to 5C are diagrams explaining a frame rate conversion process for one 3D content. Referring to FIGS. 5A to 5C, the main content includes left-eye images ML0, ML1, ML2, ... and right-eye images MR0, MR1, MR2, ... in a vertical synchronous signal period (FIG. 5A). If the main content is received, the first scaler 130 performs the downscaling and then reduces the frame rate (FIG. 5B). Referring to FIGS. 5A to 5C, the frame rate is reduced to a half level. That is, if the frame rate of the input content is 60 Hz, the frame rate is reduced to 30 Hz.

If time to process and output the 3D content has arrived in this state, the first frame rate converter 160 increases the frame rate up to a target frame rate (FIG. 5C). The first frame rate converter 160 increases the frame rate through addition of new frames ML0', MR0', ML1', MR1', ML2', MR2', ML3', MR3', and the like using the frames of the downscaled data. Referring to FIGS. 5A to 5C, the frame rate is increased up to 120 Hz. That is, the multi-content display rate becomes 120 Hz.

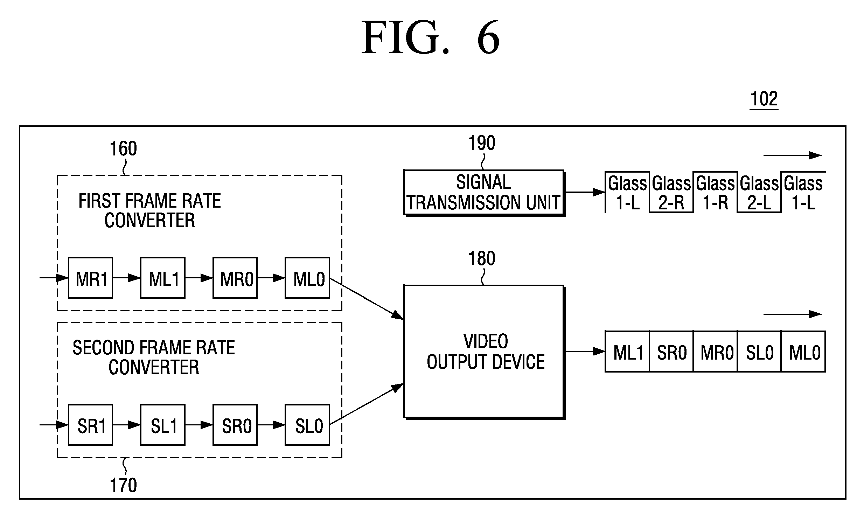

FIG. 6 shows an example of a process of configuring a multi-content frame using the main content and the sub content processed by the first and second frame rate converters 160 and 170. Referring to FIG. 6, the video output device 180 configures the multi-content frame through combination of the main content and the sub content in an arrangement pattern, such as ML0, SL0, MR0, SR0, and the like. FIG. 6 illustrates that video frames of the respective content are arranged one by one. However, the video frames may be successively arranged two by two, such as ML0, ML0, SL0, SL0, MR0, MR0, SR0, SR0, and the like.

On the other hand, the signal transmission unit 190 generates and outputs the synchronization signal for synchronizing the respective glasses devices to match the output timing of the respective content. FIG. 6 shows a state where the signal transmission unit 190 transmits one synchronization signal for sequentially turning on the left-eye shutter glass of the first glasses device 210, the left-eye shutter glass of the second glasses device 220, the right-eye shutter glass of the first glasses device 210, and the right-eye shutter glass of the second glasses device 220, according to the Bluetooth standard.

The above-described exemplary embodiments may be applied to a signal processing device in addition to the display device. The signal processing device means a device that receives and processes content and provides the processed content to the display device, such as a set top box, a recording medium reproduction device, a video processing chip, and the like.

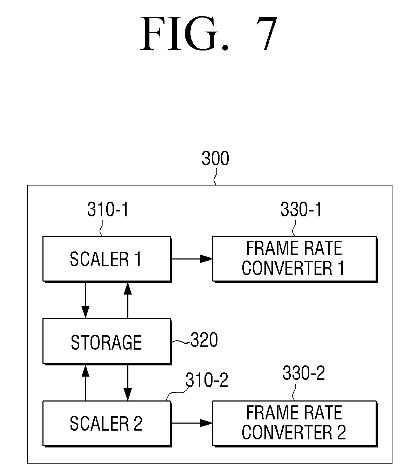

FIG. 7 is a diagram illustrating the configuration of a signal processing device 300 according to an exemplary embodiment. Referring to FIG. 7, the signal processing device 300 includes a plurality of scalers 310-1 and 310-2, a storage 320, and a plurality of frame rate converters 330-1 and 330-2.

The scalers 310-1 and 310-2 receive a plurality of content and reduce the data sizes thereof. The content may be 2D content, 3D content, or the like. Hereinafter, a case where the 3D content is received will be described as a reference.

As described above in the above-described exemplary embodiments, the scalers 310-1 and 310-2 can reduce the data size through performing of various processes, such as downscaling, frame rate reduction, data format conversion, and the like. Such a data size reduction may be performed before the content is stored in the storage 320 or after the content is read from the storage 320.

The storage 320 stores a plurality of 3D content processed by the plurality of scalers. Then, the frame rate converters 330-1 and 330-2 convert the frame rates of the respective 3D content.

The respective 3D content with the frame rate converted are provided to the display device connected to the signal processing device 300. The display device may configure the multi-content frames through combination of the 3D content transferred from the signal processing device 300, and then display the multi-content frames.

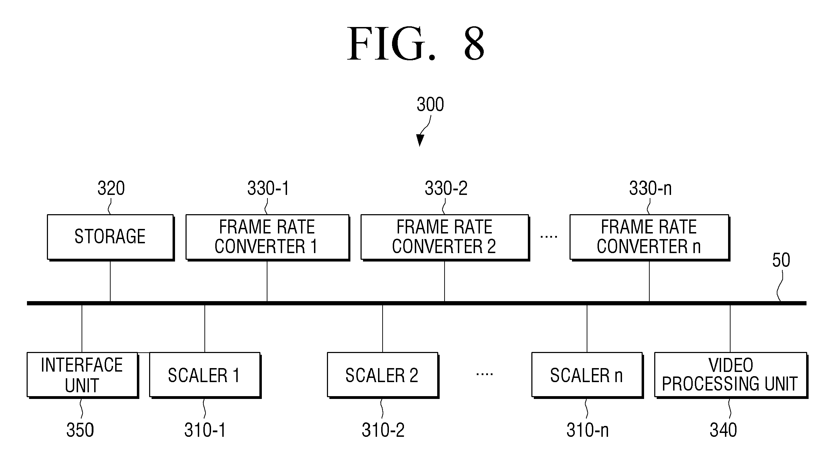

FIG. 8 is a diagram illustrating the configuration of a signal processing device 300 according to an exemplary embodiment. Referring to FIG. 8, the signal processing device 300 includes a plurality of scalers 310-1, 310-2, ..., and 310-n, a storage 320, a plurality of frame rate converters 330-1, 330-2, ..., and 330-n, a video processing unit 340, an interface unit 350, and a bus 50 that serves as a data transmission and reception path among the above-described units. Although one main bus 50 is illustrated in FIG. 7, a plurality of buses may be provided.

Since the operations of the plurality of scalers 310-1, 310-2, ..., and 310-n, the storage 320, and the plurality of frame rate converters 330-1, 330-2, ..., and 330-n are the same as those in the above-described exemplary embodiments, the duplicate description thereof will be omitted.

The video processing unit 340 configures the multi-content frames using the plurality of 3D content having the frame rates converted by the plurality of frame rate converters 330-1, 330-2, ..., and 330-n. Specifically, as shown in the method illustrated in FIG. 6, the video processing unit 340 can configure the multi-content frames.

The interface unit 350 transmits data of the multi-content frames configured by the video processing unit 340 to the display device. The interface unit 350 may be connected to an external display device through an I2C interface, a serial interface, and other known wired or radio communication interfaces to transmit the data.

As described above, the signal processing device shown in FIGS. 7 and 8 may be connected to the display device to support the multi-view function.

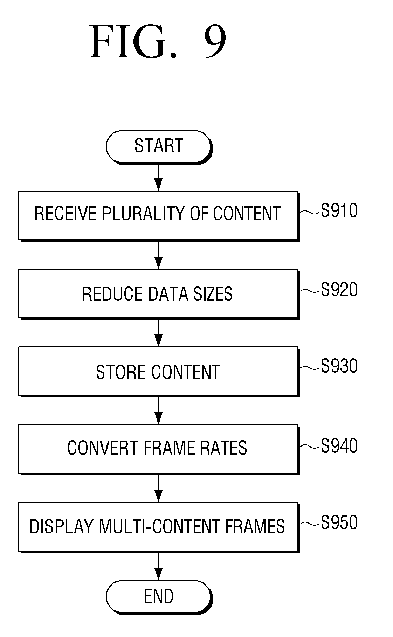

FIG. 9 is a flowchart illustrating a multi-content display method of a display device according to an exemplary embodiment. Referring to FIG. 9, if a plurality of content are received (S910), the data sizes of the respective content are reduced (S920), and the content with the reduced date sizes are stored (S930).

Then, if the time to output the respective content has arrived, the stored content are read, the frame rates of the read content are converted (S940), and the multi-content frames acquired through combination of the content are displayed (S950). Since the data size reduction method has been described in the above-described exemplary embodiments, the duplicate description thereof will be omitted.

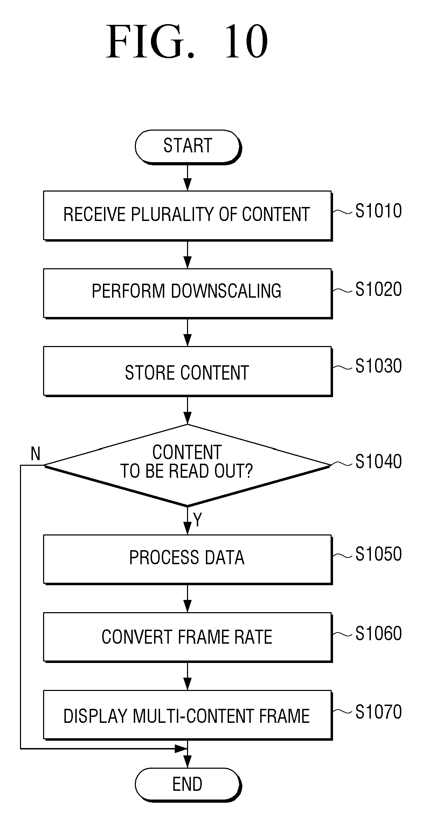

FIG. 10 is a flowchart illustrating a multi-content display method of a display device according to another exemplary embodiment. Referring to FIG. 10, if a plurality of content are received (S1010), downscaling is performed (S1020), and then the downscaled content are stored (S1030). Then, if an event indicating to read the corresponding content occurs (S1040), the data is read, and at least one data processing operation of data format conversion and frame rate reduction is performed with respect to the read data (S1050). Thereafter, the frame rate is converted into a target frame rate level (S1060), and the respective content are combined to display the multi-content frames.

Although not illustrated in FIGS. 9 and 10, the multi-content display method may further include an audio data processing step or a synchronization signal transmitting step. Further, the processed content shown in FIGS. 9 and 10 may be 2D content or 3D content.

Further, the signal processing method according to an exemplary embodiment may include downscaling the plurality of 3D content including the left-eye images and the right-eye images, respectively, converting the frame rates of the 3D content using the plurality of frame rate converters, configuring the multi-content frames using the plurality of 3D content having the converted frame rates, and transmitting the 3D multi-content frames to the display device.

Further, the signal processing method may further include converting the respective downscaled 3D content into a format that can be processed by the plurality of frame rate converters.

Since the respective steps of the signal processing method are the same as those described in the above-described exemplary embodiments, the illustration and duplicate description thereof will be omitted.

As described above, according to various exemplary embodiments, the resources that are consumed in the signal processing and displaying procedure can be reduced. Accordingly, the technology that can simultaneously provide a plurality of content, particularly, a plurality of 3D content, to a plurality of users through one display device can be effectively implemented.

As described above, the display device can receive a plurality of content and provide a multi-view. The respective content may be various kinds of content provided from various sources. Accordingly, the frame rates of the respective content may differ from each other. In this case, the multi-view display method may include receiving a plurality of different content having different frame rates, matching the frame rates of the plurality of content, and displaying multi-view frames using the respective content having the matched frame rate. The matching of the frame rates may be performed in diverse methods. That is, the frame rates can be matched through interpolation, repetition, or skipping of the frames. Hereinafter, the configuration and method for configuring the multi-view through reception of the respective content having different frame rates according to exemplary embodiments will be described.

In the case where the frame rates differ from each other, a method for interpolating the content having a relatively low frame rate is described below.

Accordingly, even in the case where the frame rates differ from each other, the content can be effectively processed to provide the multi-view.

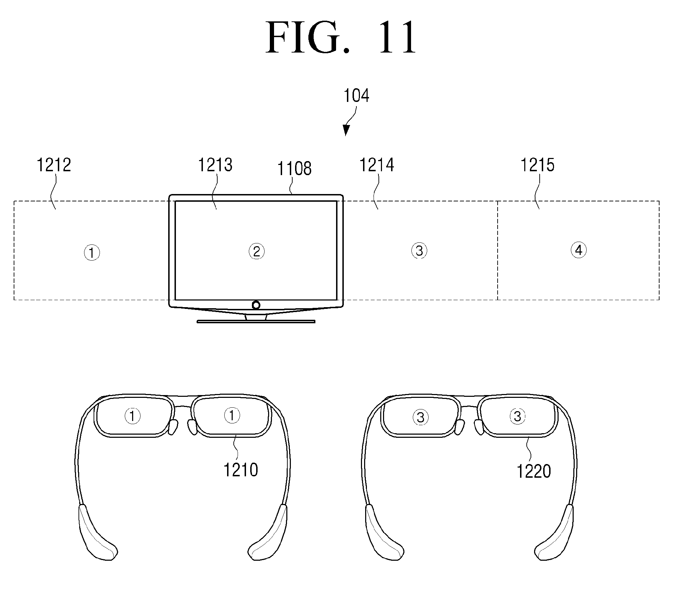

FIG. 11 is an exemplary diagram illustrating an apparatus 104 for providing a plurality of content to a plurality of users according to an exemplary embodiment.

As illustrated in FIG. 11, the apparatus 104 includes a display device 1108 and glasses devices 1210 and 1220.

The display device 1108 alternately displays the plurality of content, and transmits a synchronization signal that corresponds to the display timing of the respective content to the glasses devices 1210 and 1220. Further, the display device 1108 outputs audio signals of the respective content to the glasses devices 1210 and 1220 that correspond to the plurality of content. The display device 1108 may be implemented by a device having a display unit, such as a TV, a mobile phone, a PDA, a notebook PC, a monitor, a tablet PC, an electronic book, a digital photo frame, and a kiosk.

The glasses devices 1210 and 1220 control an open timing of the left-eye and right-eye shutter glasses according to the synchronization signal received from the display device 1108. That is, the glasses devices 1210 and 1220 open the left-eye and right-eye shutter glasses in a time period in which the respective content are displayed, according to information included in the received synchronization signal, to make it possible to view a video image of one of the plurality of content.

According to an exemplary embodiment, the first glasses device 1210 can open the left-eye and right-eye shutter glasses at a time point where a first content among first to fourth contents 1212, 1213, 1214, and 1215, which are alternately displayed, is displayed according to the synchronization signal received from the display device 1108. Accordingly, a user who wears the first glasses device 1210 can view the video image of the first content among the plurality of contents which are displayed on the display device 1108 through the corresponding glasses device 1210.

On the other hand, the display device 1108, which alternately displays first to fourth contents, can output audio signals of first to fourth contents corresponding to the display timing of first to fourth contents. Accordingly, in the above-described exemplary embodiment, the first glasses device 1210, which opens the left-eye and right-eye shutter glasses at the display time of the first content, can receive and output the audio signal of the first content that is output from the display device 1108. Accordingly, a user who wears the first glasses device 1210 can listen to the audio of the first content while viewing the video image of the first content.

By contrast, the second glasses device 1220 can open the left-eye and right-eye shutter glasses at a time point where a third content among the alternately displayed content is displayed according to the synchronization signal received from the display device 1108. As described above, if the display device 1108 outputs the audio signals of first to fourth contents together, the second glasses device 1220 can receive and output the audio signal of the third content that is output from the display device 1108. Accordingly, a user who wears the second glasses device 1220 can receive and enjoy both the video image and the audio of the third content.

The apparatus that includes the display device 1108 for providing the plurality of content and the glasses devices 1210 and 1220 for viewing the plurality of content provided from the display device 1108 has been described.

The current exemplary embodiment is directed to synchronization of the respective video frames of the plurality of content in order for the display device 1108 to display a multi-view of the plurality of content.

Hereinafter, the configuration of the display device 1108 as described above will be described in detail.

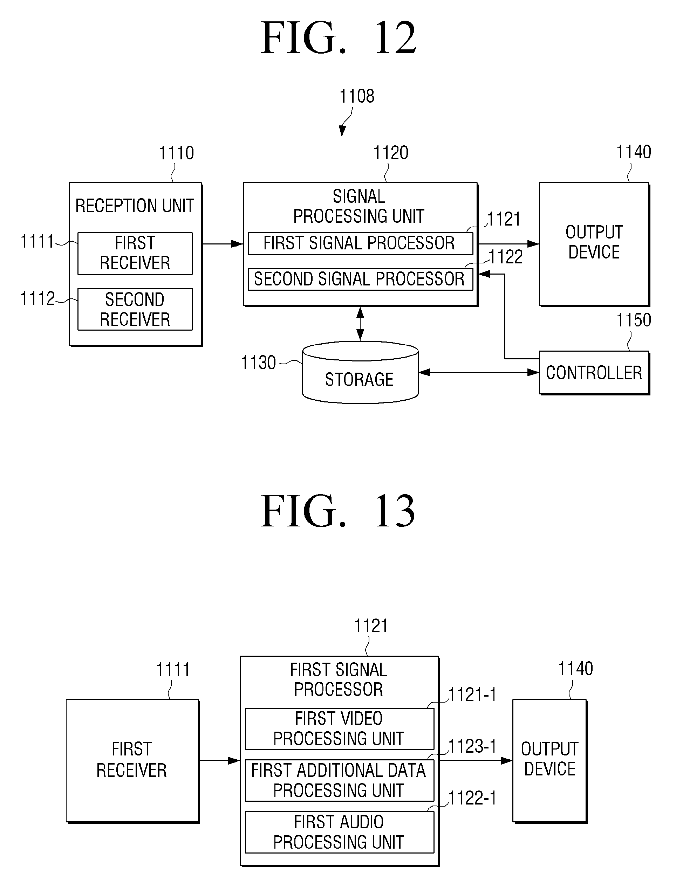

FIG. 12 is a block diagram of a display device 1108 according to an exemplary embodiment.

As illustrated in FIG. 12, the display device includes a reception unit 1110, a signal processing unit 1120, a storage 1130, an output device 1140, and a controller 1150.

The reception unit 1110 receives a plurality of content, and includes a first receiver 1111 receiving the first content and a second receiver 1112 receiving the second content having a lower frame rate than the first content. As described above, the first and second receivers 1111 and 1112 can receive the content having different frame rates. According to an exemplary embodiment, the first receiver 1111 may be implemented to include the configurations, such as a tuner, a demodulator, an equalizer, and a decoder, and receive the first content that is transmitted from an external broadcasting channel through this configuration. Since the respective configurations included in the first receiver 1111 are well known in the art, and the description of the operations of the respective configurations will be omitted.

The second receiver 1112 may receive the second content from a source device such as a web server or a reproduction device such as a DVD device through at least one of CART, AV, HDMI, COMPONENT, and USB interfaces. The second receiver 1112 can receive the second content that is transmitted from another external broadcasting channel. As described above, the second content may have a lower frame rate than the first content. However, an exemplary embodiment is not limited thereto, and the frame rate of the first content may be lower than the frame rate of the second content.

In the storage 1130, video frames of the first content received from the first receiver 1111 and the second content received from the second receiver 1112 are stored.

The signal processing unit 1120 generates video frames of the first content and the second content received from the first and second receivers 1111 and 1112 and stores the video frames in the storage 1130. The signal processing unit 1120 includes a first signal processor 1121 and a second signal processor 1122.

The first signal processor 1121 generates the video frames of the first content received from the first receiver 1111 and stores the generated video frames in the storage 1130. The second signal processor 1122 generates the video frames of the second content received from the second receiver 1112 and stores the generated video frames in the storage 1130. As described above, the first signal processor 1121 and the second signal processor 1122, which generate the video frames of the first content and the second content received from the first receiver 1111 and the second receiver 1112, may be configured as shown in FIG. 13.

FIG. 13 is a block diagram of a signal processing unit according to an exemplary embodiment.

As illustrated in FIG. 13, the first signal processor 1121 and the second signal processor 1122 generate the video frames of the first content received from the first receiver 1111 and the second content received from the second receiver 1112. Since the configurations of the first signal processor 1121 and the second signal processor 1122 are the same, only the configuration of the first signal processor 1121 will be described in detail.

As illustrated, the first signal processor 1121 includes a first video processing unit 1121-1, a first audio processing unit 1122-1, and a first additional data processing unit 1123-1.

If the first content is received from the first receiver 1111, the first video processing unit 1121-1 detects video data included in the received first content to perform signal processing. Specifically, if the content is received from the first receiver 1111, the first video processing unit 1121-1 detects the video data from the received content and decodes the detected video data. Thereafter, the first video processing unit 1121-1 performs upscaling or downscaling of the video frames of the decoded video data to suit the screen size of the video output device 1131 to be described later. If the scaling of the video data is performed, the first video processing unit 1121-1 converts the respective scaled video frames to suit the multi-content display rate with reference to the output rate of the display device. Specifically, in the case where the display device operates at 60 Hz, the first video processing unit 1121-1 may convert the frame rate of the respective scaled video frames into 120 Hz.

The first audio processing unit 1122-1 detects the audio data included in the received content and performs signal processing. Specifically, if the content is received from the first receiver 1111, the first audio processing unit 1122-1 separates the audio data from the corresponding content through demultiplexing of the received content, and decodes the separated audio data. Thereafter, the first audio processing unit 1122-1 modulates the decoded audio data into an audio signal. The audio signal modulated through the first audio processing unit 1122-1 may have a frequency channel that is different from a frequency channel of an audio signal modulated through another audio processing unit.

The first additional data processing unit 1123-1 determines whether additional data, such as EPG (Electronic Program Guide) or caption, is included in the received content, and if the additional data is included, it separates the additional data from the received content. Thereafter, the first additional data processing unit 1123-1 may add the separated additional data to the corresponding video frame.

As described above, the data of the first content and the second content processed by the first signal processor 1121 and the second signal processor 1122 may be output through the output device 1140 as a multi-view and multi-sound. The current exemplary embodiment is to display a multi-view of the plurality of content, and the operation of the output device 1140 that displays the video frames of the plurality of content in a multi-view form will be described in detail.

The output device 1140 displays a multi-view through alternate arrangement of the video frames of the second content on the first content processed by the first and second signal processors 1121 and 1122. As described above, the first and second signal processors 1121 and 1122 generate the video frames of the first content and the second content received by the first and second receivers 1111 and 1112 and store the generated video frames in the storage 1130. Accordingly, the output device 1140 displays multi-view frames through combination of the video frames of the first content and the second content stored in the storage 1130. Here, the multi-view frames mean the frame data configured so that a plurality of users can view video images of a plurality of content.

According to an exemplary embodiment, in the case of a shutter glasses type display device, the output device 1140 performs multiplexing so that the video frames of the first content and the second content output from the first and second signal processors 1121 and 1122 are alternately arranged at least one by one. Thereafter, the output device 1140 upscales the video frames of the first content and the second content that have been multiplexed to suit the screen size, and then configures the multi-view frames in which the video frames of the first content and the second content are combined to display the configured multi-view frames.

As described above, if the multi-view frames, in which the video frames of the first content and the second content are combined, are displayed, the plurality of users can view video images of the different content through glasses devices that the users are wearing.

Specifically, the glasses device is provided with a left-eye shutter glass and a right-eye shutter glass. If the multi-view frames are output through the output device 1140, the glasses device collectively turns on/off the left-eye and right-eye glasses.

As the left-eye and right-eye shutter glasses are collectively turned on/off, a user who wears the glasses device can view the video image of the content that is separated from the content to be viewed by another user. However, an exemplary embodiment is not limited thereto, and the display device can display the multi-view frames of the first content and second content in a polarized glass method or another method.

The controller 1150 may control the second signal processor 1122 to interpolate the video frames of the second content according to a difference in frame rate between the video frames of the first content and the second content stored in the storage 1130. As described above, if the second content has the frame rate that is lower than the frame rate of the first content, the second signal processor 1122 interpolates the video frames of the second content stored in the storage 1130 according to a control command of the controller 1150. However, if the first content has the frame rate that is lower than the frame rate of the second content, the controller 150 may control the first signal processor 1121 to interpolate the video frames of the first content stored in the storage 1130.

As described above, the controller 1150 controls the second signal processor 1122 to interpolate the video frames of the second content through comparison of relative arrangement positions of the respective video frames of the first content and the second content based on an output sync. Here, the output sync means a signal synchronized with the video frames of the first content and the second content output from the output device 1140. The output sync may be set according to the frame rate of the first content that is higher than the frame rate of the second content or according to information input from an outside.

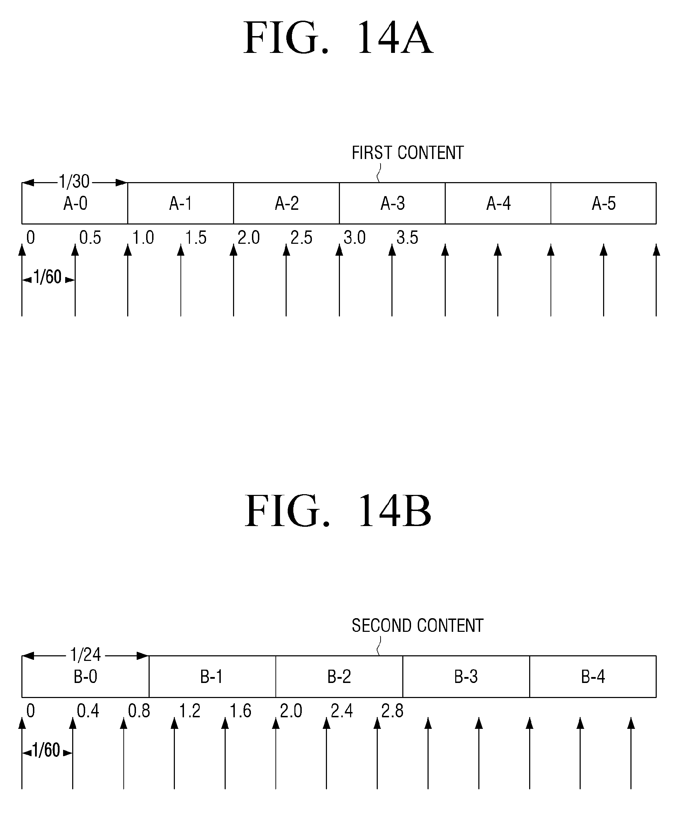

Accordingly, the second signal processor 1122 can determine the relative arrangement positions of the respective video frames of the first content and the second content based on the output sync set according to the above-described condition that an interpolation control command for the video frames of the second content is input from the controller 1150. The relative arrangement positions of the video frames of the first content and the second content based on the output sync, which can be recognized by the second signal processing unit 1122, will be described with reference to FIG. 14.

FIGS. 14A and 14B are exemplary diagrams illustrating the relative arrangement positions of the video frames of the first content and the second content on the basis of the output sync according to an exemplary embodiment.

As illustrated in FIGS. 14A and 14B, the video frames of the first content may be set to have the frame rate of 30 Hz, and the video frames of the second content may be set to have the frame rate of 24 Hz. Further, the output sync for the video frames of the first content and the second content may be set to 60 Hz.

In the case where the output sync is set to 60 Hz, the relative arrangement positions of the video frames of the first content may be divided and determined in the unit of 0.5. That is, the relative arrangement position of the video frame of the first content that corresponds to the first period (1/60) of a period in which the output sync is set to 60 Hz becomes a point that corresponds to 0.5 of a video frame A-0. Further, the relative arrangement position of the video frame of the second content that corresponds to the first period (1/60) of the period in which the output sync is set to 60 Hz becomes a point that corresponds to 0.4 of a video frame B-0.

The second signal processor 1122 according to an exemplary embodiment can determine the relative arrangement position from the output sync with reference to the number of lines of the video frames of the first content and the second content or video frame information of the first content and the second content. For example, a number of the entire input lines of the video frame of the second content may be 1125 lines, and the 112th line of the video frame of the second content may be currently stored in the storage 1130. If the output sync is generated at a time when the 112th line of the entire input lines of the video frame of the second content is stored in the storage 1130, the second signal processor 1122 splits the lines that are currently stored in the storage 1130 into a number of the entire input lines of the video frame of the second content and calculates the corresponding resultant value. This resultant value may be the relative arrangement position value of the second content at the time when the output sync is generated. That is, the second signal processor 1122 splits the 112 input lines of the video frame of the second content that are currently stored in the storage 1130 into 1125 entire input lines of the video frame of the second content. Accordingly, from the corresponding resultant value of 3.1, the relative arrangement position of the video frame of the second content at the time when the output sync is generated can be known.

Likewise, if the output sync is generated, the first signal processor 1121 splits the input lines of the video frame of the first content that are stored in the storage 1130 into a number of the entire input lines of the video frame of the first content at the time when the output sync is generated. Accordingly, from the corresponding resultant value, the relative arrangement position of the video frame of the first content at the time when the output sync is generated can be known.

As described above, once the relative arrangement position between the respective video frames of the first content and the second content is acquired on the basis of the output sync according to a predetermined condition, the controller 1150 controls the second signal processor 1122 to interpolate the video frames of the second content through comparison of the acquired relative arrangement positions between the respective video frames of the first content and the second content.

According to the control command of the controller 1150, the second signal processor 1122 performs interpolation to generate the video frame of the second content that corresponds to the point corresponding to the relative arrangement position of the first content with reference to the front and rear video frames, e.g., preceding and subsequent frames.

However, an exemplary embodiment is not limited thereto, and the controller 1150 may control the second signal processor 1122 so that the video frames of the second content are interpolated according to the reception time points of the first content and the second content. Specifically, if the first content and the second content are received, the controller 1150 compares the reception time points of the first content and the second content and confirms the storage rate of the corresponding frame of the second content that corresponds to a time point when the storing of one video frame of the first content in the storage 1130 is completed. Thereafter, the controller 1150 controls the second signal processor 1122 to generate an interpolated frame through combination of the corresponding frame of the second content and the next frame of the corresponding frame according to the confirmed storage rate.

According to such a control command, the second signal processor 1122 can estimate motions of objects displayed in the frame through comparison of the corresponding frame of the second content that corresponds to the time when the storing of one video frame of the video frames of the first content in the storage 1130 is completed, and generate the interpolated frame through application of the reception rate to the estimated motions.

For example, as described above with reference to FIGS. 14A and 14B, if storing of the video frame A-0 of video frames A-0, A-1, A-2, A-3, A-4, and A-5 of the first content in the storage 1130 is completed, about 80% of the video frame B-0, which is the corresponding frame of the second content that corresponds to the time when the storing of the video frame A-0 is completed, can be stored. Accordingly, the second signal processor 1122 may estimate the motions of objects displayed in the frame through comparison of the video frame B-0 that is the corresponding frame of the second content with the video frame B-1 that is the next frame, and generate the interpolated frame through application of the rate (80%), at which the video frame B-0 that is the corresponding frame of the second content is received or stored, to the estimated motions.

Hereinafter, a method for performing multi-view display of a plurality of content through the display device according to an exemplary embodiment will be described in detail.

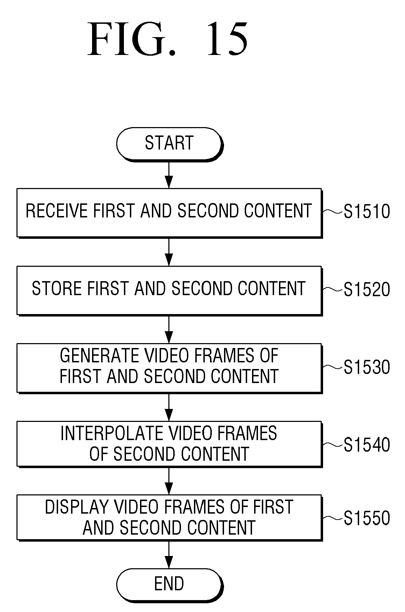

FIG. 15 is a flowchart illustrating a multi-view display method of a display device according to an exemplary embodiment.

As illustrated in FIG. 15, the display device receives the first content and the second content having the frame rate that is lower than the frame rate of the first content (S1510). Thereafter, the display device stores the received first content and second content in the storage, and generates video frames of the first content and the second content by processing the first content and the second content stored in the storage through the first signal processor and the second signal processor (S1520 and S1530). Thereafter, the display device compares the frame rate of the first content with the frame rate of the second content by the second signal processor to acquire the difference between the frame rates, and interpolates the video frames of the second content according to the result of the comparison (S1540).

Thereafter, the display device combines the video frames of the first content generated from the first signal processor and the video frames of the second content generated through interpolation of the video frames of the second content so that the video frames of the first content and the video frames of the second content are alternately arranged and displays the combined video frames (S1550). Accordingly, the display device according to an exemplary embodiment can perform the multi-view display of the plurality of content.

Specifically, the display device receives the first content and the second content through the first and second receivers. Here, the first content and the second content may be transmitted from an external broadcasting channel or may be provided from a source device such as a web server or a reproduction device such as a DVD device. One of the first content and the second content may have the frame rate that is lower than the frame rate of the other content. In an exemplary embodiment, the description is made under the assumption that the frame rate of the second content is lower than the frame rate of the second content; however, this is not limiting.

If the first content and the second content are received through the first and second receivers, the display device stores the first content and the second content in the storage. If the first content and the second content are stored in the storage, the display device generates video frames of the first content and the second content stored in the storage by the first signal processor and the second signal processor. Since the operations of the first signal processor and the second signal processor to generate the video frames of the first content and the second content have been described in detail with reference to FIG. 13, the detailed description thereof will be omitted.

If the video frames of the first content and the second content are generated by the first signal processor and the second signal processor, the display device stores the generated video frames of the first content and the second content in the storage. Thereafter, the display device interpolates the video frames of the second content through comparison of the frame rate of the video frames of the first content with the frame rate of the video frames of the second content stored in the storage, and generates the interpolated video frames of the second content.

Specifically, the display device can interpolate the video frames of the second content through comparison of the relative arrangement positions of the respective video frames of the first content and the second content. Here, the output sync means a signal synchronized with the video frames of the first content and the second content which are alternately displayed. The output sync may be set according to the frame rate of the first content that is higher than the frame rate of the second content or according to information input from an outside.

Accordingly, the display device may determine the relative arrangement positions of the respective video frames of the first content and the second content based on the output sync set according to the above-described condition. As illustrated in FIGS. 14A and 14B, the video frames of the first content may be set to have the frame rate of 30 Hz, and the video frames of the second content may be set to have the frame rate of 24 Hz. Further, the output sync for the video frames of the first content and the second content may be set to 60 Hz.

In the case where the output sync is set to 60 Hz, the relative arrangement positions of the video frames of the first content may be divided and determined in the unit of 0.5. That is, the relative arrangement position of the video frame of the first content that corresponds to the first period (1/60) of a period in which the output sync is set to 60 Hz becomes a point that corresponds to 0.5 of the video frame A-0. Further, the relative arrangement position of the video frame of the second content that corresponds to the first period (1/60) of the period in which the output sync is set to 60 Hz becomes a point that corresponds to 0.4 of the video frame B-0.

The display device may determine the relative arrangement position from the output sync with reference to the number of lines of the video frames of the first content and the second content or video frame information of the first content and the second content. For example, a total number of the entire input lines of the video frame of the second content may be 1125 lines, and the 112^{th} line of the video frame of the second content may be currently stored in the storage. If the output sync is generated at a time when the 112^{th} line of the video frame of the second content is stored in the storage, the display device splits the lines that are currently stored in the storage by the number of the entire input lines of the video frame of the second content and calculates the corresponding resultant value of 3.1. From the corresponding resultant value of 3.1 as described above, the relative arrangement positions of the video frame of the second content at the time when the output sync is generated can be known.

As described above, the display device may determine the relative arrangement position of the video frame of the first content at the time when the output sync is generated through the above-described method. As described above, once the relative arrangement position between the respective video frames of the first content and the second content is acquired on the basis of the output sync according to the predetermined condition, the display device can interpolate the video frames of the second content through comparison of the acquired relative arrangement positions between the respective video frames of the first content and the second content.

As described above, the display device performs interpolation to generate the video frame of the second content that corresponds to the point corresponding to the relative arrangement position of the first content with reference to the front and rear video frames. However, an exemplary embodiment is not limited thereto, and the display device can interpolate the video frames of the second content according to the reception time points of the first content and the second content. Specifically, if the first content and the second content are received, the display device compares the reception time points of the first content and the second content and confirms the storage rate of the corresponding frame of the second content that corresponds to the time point where the storing of one video frame of the first content in the storage is completed. Thereafter, the display device generates an interpolated frame through combination of the corresponding frame of the second content and the next frame of the corresponding frame according to the confirmed storage rate.

The display device can estimate the motions of objects displayed in the frame through comparison of the corresponding frame of the second content that corresponds to the time when the storing of one video frame of the video frames of the first content in the storage is completed, and generate the interpolated frame through application of the reception rate to the estimated motions.

For example, as described above referring to FIGS. 14A and 14B, if storing of the video frame A-0 of the first content in the storage 1130 is completed, about 80% of the video frame B-0, which is the corresponding frame of the second content that corresponds to the time when the storing of the video frame A-0 is completed, can be stored. Accordingly, the display device can estimate the motions of the objects displayed in the frame through comparison of the video frame B-0 that is the corresponding frame of the second content with the video frame B-1 that is the next frame, and generate the interpolated frame through application of the rate (80%), at which the video frame B-0 that is the corresponding frame of the second content is received or stored, to the estimated motions.

As described above, by interpolating the frame rate, an effective multi-view display using the plurality of content can be implemented.

On the other hand, the frame rate can be matched through repetition or skipping of the frames. That is, according to another exemplary embodiment in the case where the frame rates differ from each other, the frame rates can be matched by integrating key frames through repetition or skipping of the frames. Hereinafter, an exemplary embodiment to integrate the frame rates will be described.

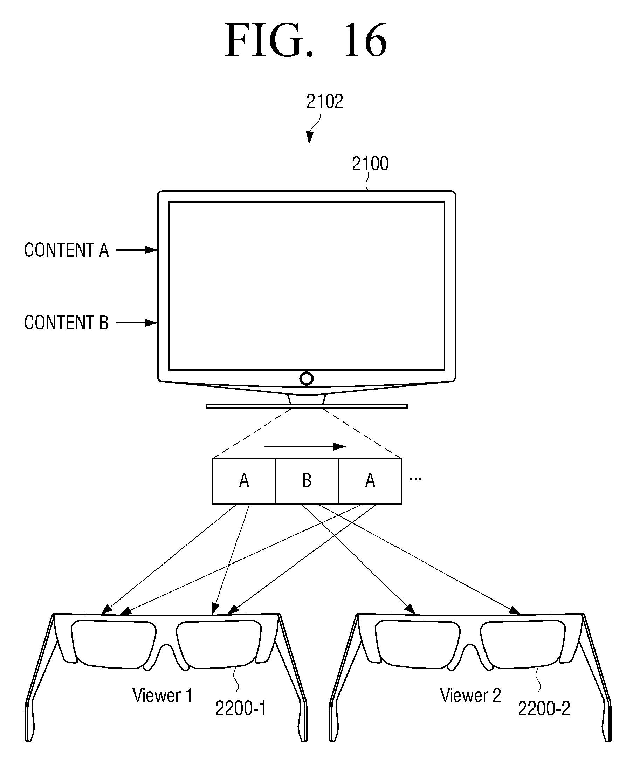

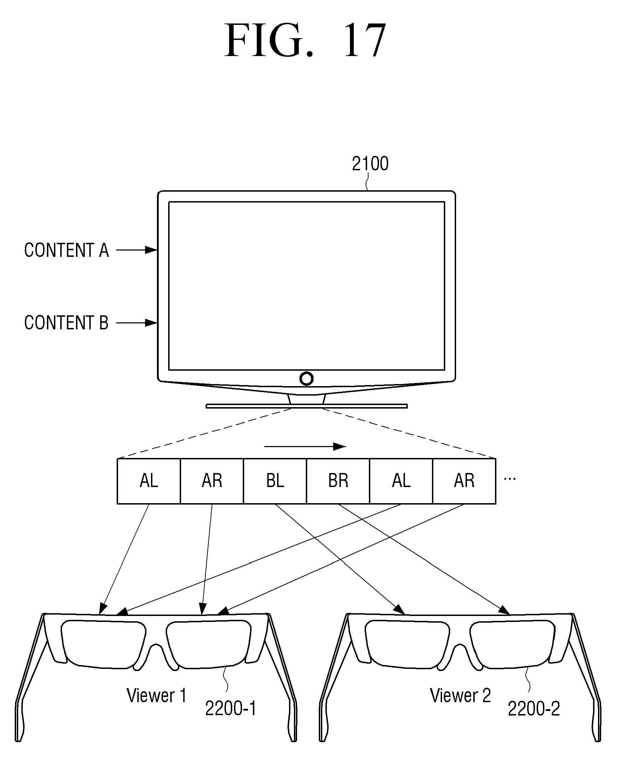

FIGS. 16 and 17 are schematic diagrams illustrating the configuration and operation of a content providing system 2102 according to an exemplary embodiment.

Referring to FIG. 16, a display device 2100 alternately displays a plurality of 2D content (content A and B), generates and transmits synchronization signals corresponding to the respective content to first and second glasses devices 2200-1 and 2200-2. Although two glasses devices are illustrated in FIG. 16, the number of glasses devices may be diversely set. That is, in the case of a triple-view mode for providing three kinds of content as the multi-view mode, three glasses may be used, and in the case of a quadruple-view mode for providing four kinds of content, four glasses may be used. FIG. 16 shows a dual-view mode for providing two kinds of content A and B.

The first glasses device 2200-1 may operate to open both the left shutter glass and the right shutter glass when one content A is displayed according to the synchronization signal, and operate to turn off both the left shutter glass and the right shutter glass when the other content B is displayed. Accordingly, a viewer 1 who wears the first glasses device 2200-1 can view only one content A that is synchronized with the first glasses device 2200-1 of a plurality of content A and B that are alternately displayed. In the same manner, a viewer 2 who wears the second glasses device 2200-2 can view only the content B.

FIG. 17 is a diagram explaining a method for providing a plurality of 3D content according to an exemplary embodiment.

As illustrated, in the case of a plurality of 3D content (content A and B), the display device 2100 may alternately display left-eye images and right-eye images of the 3D content while alternately displaying the plurality of 3D content (content A and B).

For example, the display device displays the left-eye and right-eye images AL and AR of the 3D content A, and alternately displays the left-eye and right-eye images BL and BR of the 3D content B. In this case, the first glasses device 2200-1 can open the left-eye and right-eye glasses at a time point where the left-eye and right-eye images AL and AR of the 3D content A are respectively displayed, and the second glasses device 2200-2 can open the left-eye and right-eye glasses at a time point where the left-eye and right-eye images BL and BR of the 3D content B are respectively displayed.

Accordingly, a viewer 1 who wears the first glasses device 2200-1 may view only the 3D content A, and a viewer 2 who wears the second glasses 2200-2 may view only the 3D content B.

However, the above description has been made on the assumption that a shutter glasses type has been adopted. In the case of a polarization type, it will be apparent to those skilled in the art that the multi-view mode can be supported through implementation of the display device so that the polarization direction of the plurality of content images coincide with the polarization direction of the first and second glasses devices.

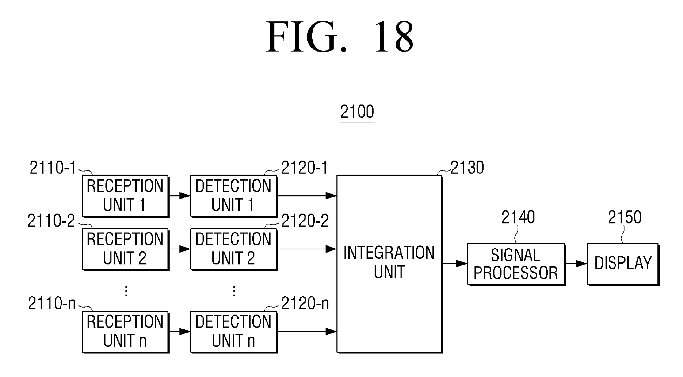

FIG. 18 is a block diagram illustrating the configuration of a display device according to an exemplary embodiment. Referring to FIG. 18, the display device 2100 includes a plurality of reception units 2110-1, 2110-2, ..., and 2110-n, e.g., receivers, a plurality of detection units 2120-1, 2120-2, ..., and 2120-n, e.g., detectors, an integration unit 2130, a signal processor 2140, and a display 2150.

The plurality of reception units 2110-1, 2110-2, ..., and 2110-n receive a plurality of content. Specifically, the respective reception units 2110-1, 2110-2, ..., and 2110-n receive content from a broadcasting station that transmits broadcasting program content using a broadcasting network or from a web server that transmits content files using the Internet. Further, the respective reception units may receive content from various kinds of recording medium reproduction devices that are provided in the display device 2100 or connected to the display device 2100. The recording medium reproduction device means a device that reproduces content stored in various types of recording media, such as a CD, a DVD, a hard disk, a Blu-ray disk, a memory card, and/or a USB memory.

In the case of an exemplary embodiment in which content is received from a broadcasting station, the plurality of reception units 2110-1, 2110-2, .., and 2110-n may be implemented to include the configurations, such as a tuner (not illustrated), a demodulator (not illustrated), and an equalizer (not illustrated). By contrast, in the case of an embodiment in which content is received from a source such as a web server, the plurality of reception units 2110-1, 2110-2, ..., and 2110-n may be implemented by network interface cards (not illustrated). Further, in the case of an embodiment in which content is received from the various kinds of recording medium reproduction devices as described above, the plurality of reception units 2110-1, 2110-2, ..., and 2110-n may be implemented by interface units (not illustrated) connected to the recording medium reproduction device. As described above, the plurality of reception units 2110-1, 2110-2, ..., and 2110-n may be implemented by diverse forms according to exemplary embodiments.

Further, it is not necessary for the plurality of reception units 2110-1, 2110-2, ..., and 2110-n to receive the content from the same type of sources, and the plurality of reception units 2110-1, 2110-2, ..., and 2110-n may receive the content from different types of sources. For example, the reception unit 1 2110-1 may be implemented in a form that includes a tuner, a demodulator, and an equalizer, and the reception unit 2 2110-2 may be implemented by a network interface card.

On the other hand, the plurality of reception units 2110-1, 2110-2, ..., and 2110-n may receive a plurality of content having different frame rates. Specifically, the respective reception units 2110-1, 2110-2, ..., and 2110-n may receive content that is composed of 24 frames per second or 30 frames per second.

The content received in the plurality of reception units 2110-1, 2110-2, ..., and 2110-n may be 2D content or 3D content. 3D content means content that enables a user to view 3D effects using a multi-viewpoint image that expresses the same object from different viewpoints.

The 3D content may be in various formats, and particularly, in a format according to one of a top-bottom type, a side-by-side type, a horizontal interleave type, a vertical interleave type, a checker board type, and/or a sequential frame type.

The plurality of detection units 2120-1, 2120-2, ..., and 2120-n may detect key frames that constitute the content input in various methods.

For example, if the video frames that constitute the content are input with the frame rate of 24 frames per second or 30 frames per second, the respective detection units 2120-1, 2120-2, ..., and 2120-n can detect the respective frames as the key frames.

On the other hand, if the video frames that constitute the content are input with the frame rate of 60 frames per second, the respective detection units 2120-1, 2120-2, ..., and 2120-n can detect the key frames through extraction of input frames in a pull-down method. For example, if three sheets of the current frames are repeated and two sheets of the next frames are repeated, the respective detection units 2120-1, 2120-2, ..., and 2120-n determine that the input content has been converted into a 3:2 pull-down type in order for the display device 2100 to reproduce the content, and detect one of three repeated frames or one of two repeated frames as a key frame.

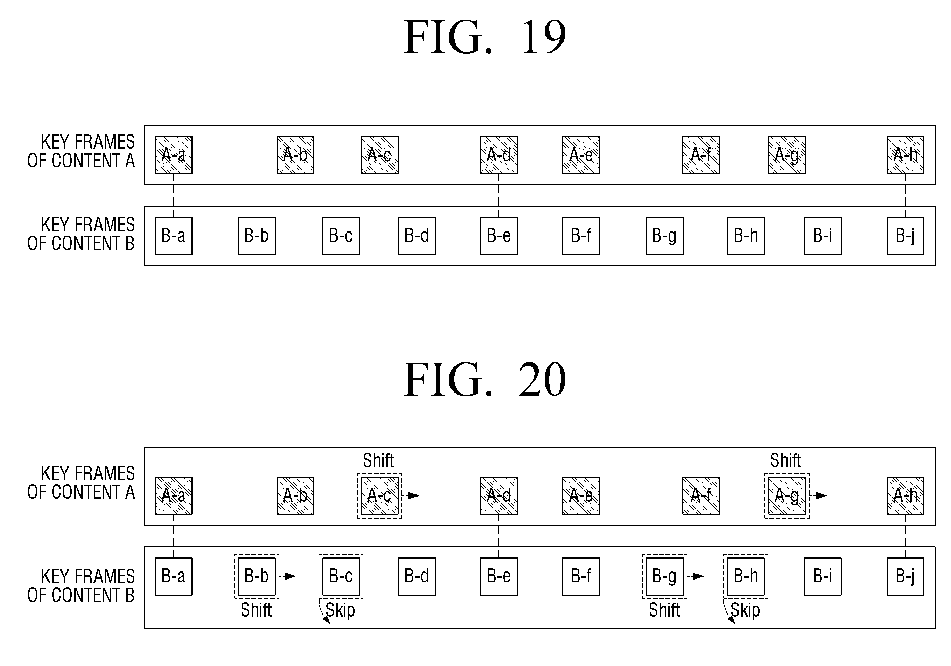

The integration unit 2130 integrates the detected key frames. Specifically, if the plurality of content have the different numbers of key frames, the integration unit 2130 makes the numbers of key frames coincide with each other through performing of frame repetition or frame skipping, and integrates the corresponding key frames of the respective content. In this case, the integration unit 2130 can integrate the respective key frames of the plurality of content into a top-to-bottom format, a side-by-side format, a checker board format, or an interlaced format. The details thereof will be described with reference to FIGS. 19 to 22.

FIGS. 19 to 22 are diagrams explaining a method for integrating key frames of the respective content having different frame rates according to an exemplary embodiment. Particularly, in the drawings, content A is of a 3:2 pull-down type, and has the frame rate of 24 frames per second. Content B is of a 2:2 pull-down type, and has the frame rate of 30 frames per second.

As illustrated in FIG. 19, if key frames A-a, A-b, A-c, ... detected from the content A and key frames B-a, B-b, B-c, ... detected from the content B are input, the integration unit 130 makes the numbers of key frames of the plurality of content equal to each other through skipping of part of key frames that constitute the content having higher frame rate. Here, skipping of key frames may be construed as removal of the corresponding frames.

For example, as illustrated in FIG. 20, the integration unit 130 may make the number of key frames of content B equal to the number of key frames of content A through skipping of the third key frame B-c, the eighth key frame B-h, ... of the content B of the 2:2 pull-down type.

Here, the skipped key frames may be key frames that do not temporally coincide with each other depending on the pull-down method of the respective content. That is, as illustrated in FIGS. 19 and 20, the first key frame A-a, the fourth key frame A-d, the fifth key frame A-e, ...of the content A of the 3:2 pull-down type temporally coincide with the first key frame B-a, the fifth key frame B-e, the sixth key frame B-f, ... of the content B of the 2:2 pull-down type, respectively. Accordingly, the integration unit 2130 may make the respective key frames of the plurality of content equal to each other through skipping of at least one of key frames that do not temporally coincide with each other except for the above-described coincident key frames.

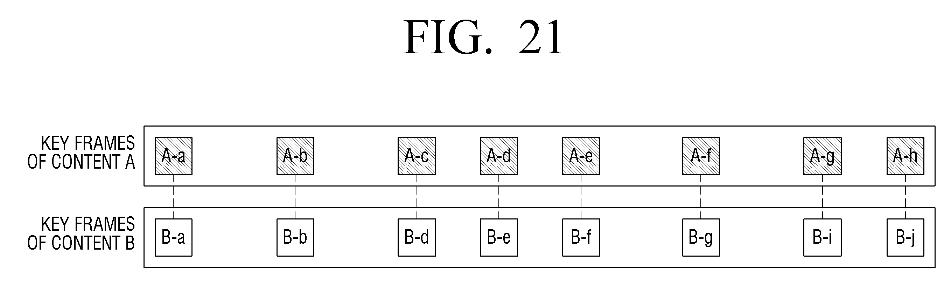

In order to integrate the corresponding key frames of the respective content, the integration unit 2130 may rearrange the key frames. For example, as illustrated in FIG. 21, the integration unit 2130 may make the third key frame A-c of the content A temporally coincide with the fourth key frame B-d of the content B through shifting of the third key frame A-c of the content A, and may make the second and seventh key frames B-b and B-g of the content B temporally coincide with the second and sixth key frames A-b and A-f of the content A, respectively, through shifting of the second and seventh key frames B-b and B-g of the content B, as illustrated in FIG. 20. As described above, the integration unit 2130 can make the key frames of the respective content temporally coincide with each other through rearrangement of the key frames the numbers of which have been made equal to each other.

In the above-described exemplary embodiment, the integration unit 2130 makes the numbers of key frames coincide with each other through skipping of the key frames. However, the numbers of the key frames may be made equal to each other through repetition of the key frames. That is, the integration unit 2130 may make the numbers of the respective key frames of the plurality of content equal to each other through repetition of some of the key frames that constitute the content having a lower frame rate.

For example, in FIG. 20, the integration unit 2130 may make the numbers of the respective key frames of the plurality of content equal to each other through generation of a key frame of the content A that corresponds to the third frame B-c of the content B, a key frame of the content A that corresponds to the seventh frame B-g of the content B, and the like.

Here, the integration unit 2130 may generate key frames of the content A that are temporally adjacent to the third frame B-c of the content B, the seventh frame B-g of the content B, and the like, through copying of the corresponding key frames. That is, the integration unit 2130 may generate the key frame of the content A that corresponds to the third frame B-c of the content B through copying of the second frame A-b of the content A, and generate the key frame of the content A that corresponds to the seventh frame B-g of the content B through copying of the sixth key frame A-f of the content A.

The integration unit 2130 integrates the key frames that are arranged to temporally coincide with each other in various ways.

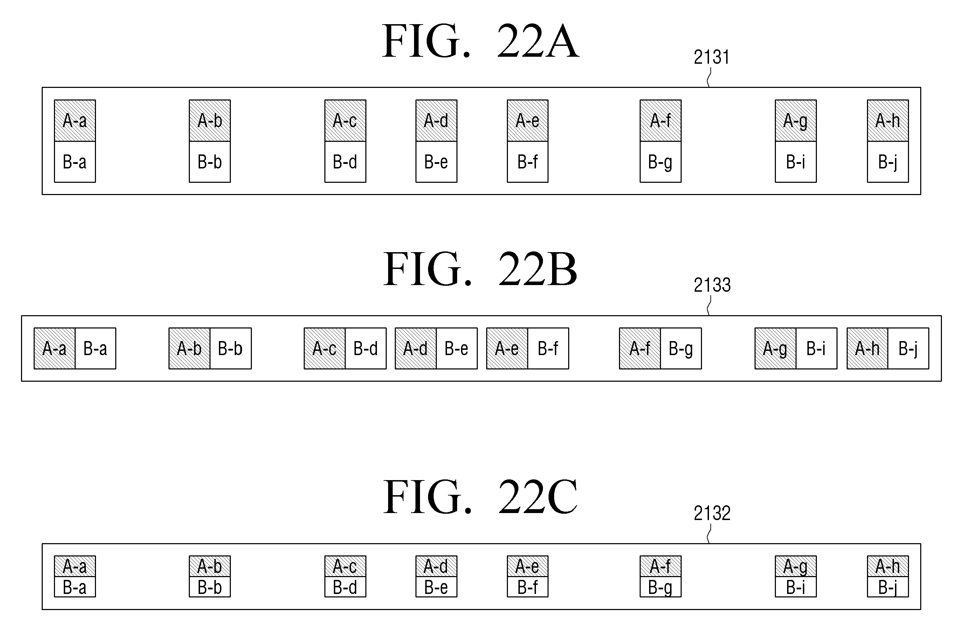

For example, the integration unit 2130 may integrate the key frames 2131 of the content A and the content B in a top-to-bottom format as shown in FIG. 22A. Specifically, the top-to-bottom format is a format in which key frames of one content are positioned on an upper portion and key frames of the other content are positioned on a lower portion. As shown in FIG. 22C, key frames 2132 of the respective content may be 1/2-subsampled in the vertical direction, and then be positioned on the upper portion and the lower portion, in a top-to-bottom format.

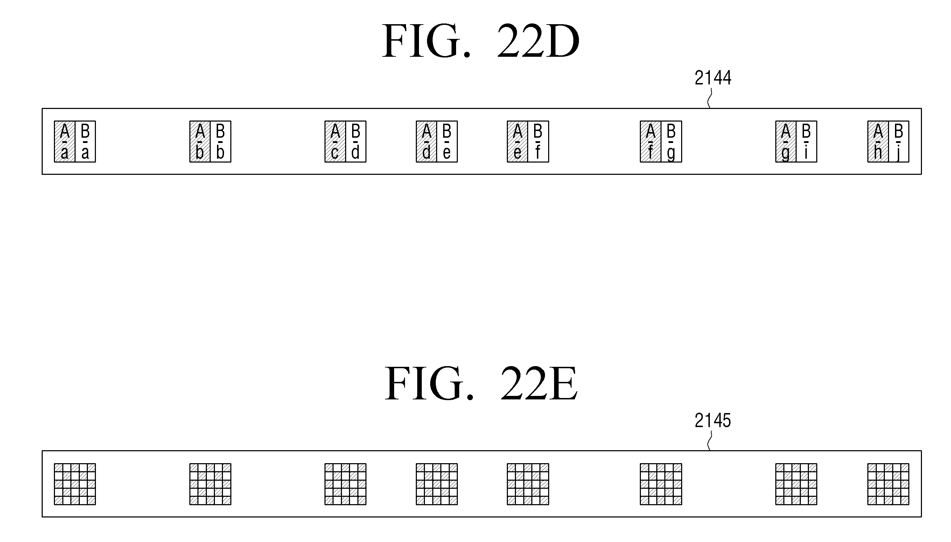

The integration unit 2130 may integrate the key frames 2133 of the content A and the content B in a side-by-side format as shown in FIG. 22B. Specifically, the side-by-side format is a format in which key frames of one content are positioned on the left side and key frames of the other content are positioned on the right side. As shown in FIG. 22D, key frames 2144 of the respective content may be 1/2-subsampled in the horizontal direction, and then be positioned on the left side and the right side, in a side-by-side format.

The integration unit 2130 may integrate the key frames 2145 of the content A and the content B in a checker board format as shown in FIG. 22E. Specifically, the checker board format is a format in which key frames of one content and key frames of the other content are 1/2-subsampled in the vertical and horizontal directions, respectively, and then pixels of the respective sampled key frames are alternately positioned.

In addition to the above-described formats, the respective key frames may be integrated using an interlaced format in which key frames of one content and key frames of the other content are 1/2-subsampled in the vertical direction, and then pixels of the respective key frames are alternately positioned for each line. As described above, the integration unit 2130 may integrate the key frames of the plurality of content according to various methods.

If key frames of 3D content are received, the integration unit 2130 may generate left-eye video frames and right-eye video frames that constitute the 3D content according to the format type, and integrate the respective key frames of the plurality of content.

For example, if the 3D image format is a format according to a top-bottom type, a side-by-side type, a horizontal interleave type, a vertical interleave type, a checker board type, or a sequential frame type, the integration unit 2130 generates the left-eye video frames and the right-eye video frames through extraction of the left-eye video portions and the right-eye video portions of the respective video frames and magnification scaling or interpolating of the extracted video portions.

Further, if the 3D image format is of a general frame sequence type, the integration unit 2130 extracts the left-eye video frames and the right-eye video frames from the respective frames.

Then, the integration unit 2130 makes the numbers of frames of the respective 3D content coincide with each other through skipping of the left-eye video frames and the right-eye video frames that constitute the plurality of 3D content, and integrates the left-eye and right-eye video frames to generate integrated key frames.

The signal processor 2140 processes the key frames integrated by the integration unit 2130. That is, the signal processor 2140 performs motion judder cancelation process through interpolation of the key frames integrated by the integration unit 2130. Specifically, the signal processor 2140 performs FRC (Frame Rate Control) for converting the frame rate of the key frames integrated by the integration unit 2130 into a frame rate that is displayable on the display device 2100. For example, in the case of an NTSC (National Television System Committee) type, the frame rate that is displayable on the display device 2100 may be 60 frames per second.

In this case, the signal processor 2140 may generate an interpolated frame through estimation of motions of objects included in the current frame and the next frame from the integrated key frames, insert the interpolated frame between the current frame and the next frame, and convert the frame rate of the integrated key frames into the frame rate that is displayable on the display device 2100. Since any known method for generating an interpolated frame through estimation of the motions can be used, the detailed description thereof will be omitted.

Further, the signal processor 2140 may separate the frames, of which the frame rate has been converted, for the respective content and perform upscaling or downscaling of the respective frames to suit the screen size of the display unit 2150 using scalers (not illustrated).

The display 2150 displays the multi-view frame using data output from the signal processor 2140. Specifically, the display 2150 may display the multi-view frames through multiplexing of the respective content provided from the signal processor unit 2140 so that the video frames of the respective content are alternately arranged at least one by one.

For example, in the case of a shutter glasses type display device, the display 2150 configures and displays the first content to the n-th content so that video frames of the first content, video frames of the second content, ..., and video frames of the n-th content are alternately arranged at least one by one.

If the frame rate that is displayable on the display device 2100 is 60 frames per second according to the NTSC type, the signal processor 2140 converts the frame rate of the left-eye image and the right-eye image that constitute the 3D content into 60 frames per second. The display 2150 may display the left-eye video frames and the right-eye video frames of the 3D content, which are alternately arranged, with a driving frequency of nx60 Hz. A user can view the content desired by the user through wearing of a glasses device (not illustrated) that interlocks with the display timing of the content on the display 2150.

Specifically, the glasses device is composed of a left-eye shutter glass and a right-eye shutter glass. The left-eye shutter glass and the right-eye shutter glass are alternately turned on/off when viewing the 3D content, while they are collectively turned on/off according to the output timing of the content synchronized with the glasses device when the video frames of the respective content are alternately arranged and displayed at least one by one as described above. Accordingly, a user can view the content separately from other users.

As described above, a mode in which video frames of the respective content are alternately arranged to be displayed may be called a multi-view mode (or a dual-view mode). In the case of a normal mode (or a single-view mode) in which only one of 2D content and 3D content is displayed, the display device 2100 may activate only one of the reception units 2110-1, 2110-2, ..., and 2110-n to process the content. If a user selects a multi-view mode in a state where the display device 2100 operates in a normal mode, the display device 2100 also activates the remaining reception unit to process the data in the above-described manner.

In the case of using a plurality of 3D content, the display 2150 may multiplex left-eye images and right-eye images included in the respective 3D content that are provided from the signal processor 2140 in a predetermined arrangement form, and alternately arrange the multiplexed images of the 3D content together with the video frames of the other content.

Specifically, in the case where the display device 2100 operates at 60 Hz, the display 2150 may sequentially arrange a left-eye image and a right-eye image of the first content, a left-eye image and a right-eye image of the second content, ..., and a left-eye image and a right-eye image of the n-th content, and display the sequentially arranged images with a driving frequency of 2xnx60 Hz. The user may view the left-eye image and the right-eye image of one 3D content through the glasses device.

Although not illustrated in FIG. 18, the display device 2100 further includes a configuration that differently provides audio data included in the respective content when the display device 2100 operates in the multi-view mode. That is, the display device 2100 may further include a demultiplexer (not illustrated) that separates video data and audio data from the content received by the respective reception units 2110-1, 2110-2, ..., and 2110-n, an audio decoder (not illustrated) that decodes the separated audio data, a modulation unit (not illustrated) that modulates the decoded audio data into different frequency signals, and an output unit (not illustrated) that transmits the respective modulated audio data to an output unit (not illustrated). The respective audio data output from the output unit are provided to the users through output means such as earphones provided on the glasses devices.

If additional information, such as EPG (Electronic Program Guide) or caption, is included in the content according to circumstances, the demultiplexer may additionally separate the additional data from the content and transfer the separated additional data to the controller 2160 to be described later. Further, the display device 2100 may add the caption or the like, which has been processed to be displayable through an additional data processing unit (not illustrated).

On the other hand, if 3D content is received through the activated reception unit 2110-1 among the plurality of reception units 2110-1, 2110-2, ..., and 2110-n in a normal mode (particularly, for displaying the 3D content), the signal processor 2140 processes the left-eye image and the right-eye image that constitute the 3D content.

Specifically, the display 2150 alternately arranges and displays the left-eye video frames and the right-eye video frames of the respective 3D content processed by the signal processor 2140. Specifically, the display 2150 alternately displays the 3D content in the temporal order of "left-eye video fame → right-eye video fame → left-eye video fame → right-eye video fame → ...". If the frame rate that is displayable on the display device 2100 is 60 frames per second according to the NTSC type, the signal processor 2140 converts the frame rate of the left-eye image and the right-eye image that constitute the 3D content into 60 frames per second. The display 2150 may display the left-eye video frames and the right-eye video frames of the 3D content, which are alternately arranged, with a driving frequency of 120 Hz.

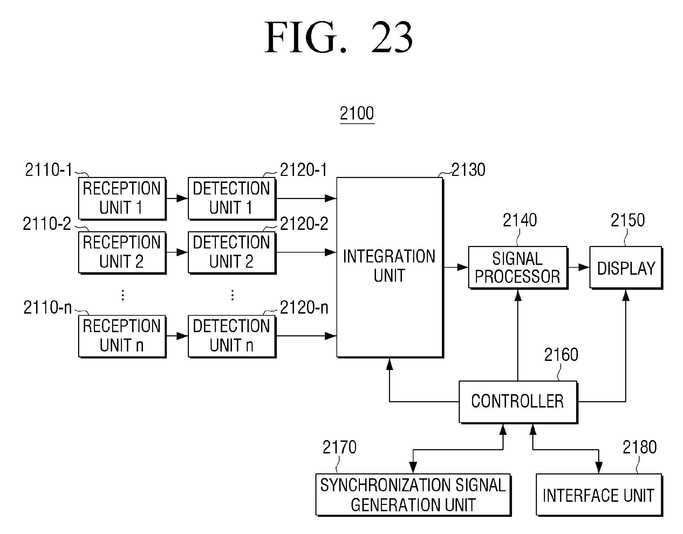

FIG. 23 is a block diagram illustrating the detailed configuration of the display device. Referring to FIG. 23, the display device 2100 includes a plurality of reception units 2110-1, 2110-2, ..., and 2110-n, a plurality of detection units 2120-1, 2120-2, ..., and 2120-n, an integration unit 2130, a signal processor 2140, a display 2150, a controller 2160, a synchronization signal generation unit 2170, and an interface unit 2180. In describing the configuration illustrated in FIG. 23, the same drawing reference numerals as those in FIG. 18 are used for the configurations having the same functions, and thus the duplicate description thereof will be omitted.

The controller 2160 controls the overall operation of the display device 2100. Specifically, the controller 2160 may control the plurality of reception units 2110-1, 2110-2, ..., and 2110-n, the plurality of detection units 2120-1, 2120-2, ..., and 2120-n, the integration unit 2130, the signal processor 2140, and the display 2150 to perform the functions corresponding to the respective configurations. Since these configurations have been described with reference to FIG. 18, the duplicate description thereof will be omitted.

Further, the controller 2160 may control the synchronization signal generation unit 2170 and the interface unit 2180 to make the glasses device synchronized with the display timing of the content that is displayed on the display unit 2150.

The synchronization signal generation unit 2170 generates a synchronization signal for synchronizing the glasses devices corresponding to the respective content according to the display timing of the respective content. Specifically, the synchronization signal generation unit 2170 generates the synchronization signal for synchronizing the glasses devices with the display timing of the video frame of the plurality of content in a multi-view mode, and generates the synchronization signal for synchronizing the glasses devices with the display timing of the left-eye video frames and the right-eye video frames of the 3D content in a normal mode.

The interface unit 2180 transmits the synchronization signal to the glassed devices. The interface unit 2180 transmits the synchronization signal to the glasses devices through performing of communications with the glasses devices according to various radio communication methods.

For example, the interface unit 2180 may be provided with a Bluetooth communication module to perform communications with the glasses devices, generate and transmit a transfer packet according to the Bluetooth communication standard to the glasses devices as the synchronization signal.

The transfer packet includes time information for turning on/off shutter glasses of the glasses devices in synchronization with the display timing of the content. Specifically, the time information includes information on a left shutter open offset time for opening the left-eye shutter glass of the glasses device, a left shutter close offset time for closing the left-eye shutter glass, a right shutter open offset time for opening the right-eye shutter glass, and a right shutter close offset time for closing the right-eye shutter glass.

The offset time is delay information from a reference time point set for the content to a shutter glass open or close time point. That is, the glasses device opens/closes the left-eye shutter glass and the right-eye shutter glass when an offset time elapses from the reference time point.

For example, the reference time point may be a time point where a vertical synchronous signal (that is, frame sync) is generated in the video frame, and information on the reference time point may be included in the transfer packet. Further, the transfer packet may include information on a clock signal that is used in the display device 2100. Accordingly, if the transfer packet is received, the glasses device may synchronize its own clock signal with the clock signal of the display device 2100, and open/close the shutter glasses through determination of whether the offset time has arrived from the time point where the vertical synchronous signal is generated using the clock signal.

In addition, the transfer packet may further include information on a period of the frame sync, information for inscribing decimal point information when the period of the frame sync has a decimal point, and the like.

The interface unit 2180 performs pairing according to a Bluetooth communication method with the glasses device through transmission and reception of a Bluetooth device address and a pin code with the glasses device. If the pairing is completed, the communication interface unit 2150 may transmit the synchronization signal that corresponds to one of the plurality of content to the glasses device based on the information acquired through the pairing.

Further, if the pairing with a plurality of glasses devices is completed, the communication interface unit 2150 may transmit the same or different synchronization signals to different glasses devices based on the information acquired through the pairing. Further, the communication interface unit 2150 may transmit the same synchronization signal to a part of the glasses devices. For example, the communication interface unit 2150 may transmit the synchronization signal corresponding to content A to the first glasses device, the synchronization signal corresponding to content B to the second glasses device, and the synchronization signal corresponding to content A to the third glasses device.

In the above-described exemplary embodiment, the interface unit 2180 and the glasses device communicate with each other according to the Bluetooth communication method. However, this is merely exemplary. That is, in addition to the Bluetooth method, communication methods, such as infrared communications and Zigbee, may be used, and in a short distance, a communication channel may be formed to perform communications according to various radio communication methods for transmitting and receiving signals.

Further, in the above-described exemplary embodiment, the configuration for generating the synchronization signal and the configuration for transmitting the synchronization signal are separately provided. However, this is for convenience in explanation. That is, the interface unit 2180 may generate and transmit the synchronization signal to the glasses device, and in this case, the synchronization signal generation unit 2170 can be omitted.

Further, in the above-described exemplary embodiment, the display device 2100 generates and transmits the synchronization signals corresponding to the display timing of the content to the glasses device. However, this is merely exemplary.

That is, the controller 2160 may control the interface unit 2180 to generate the synchronization signals corresponding to the display timing of the respective content as one transfer packet according to the Bluetooth communication standard. That is, the interface unit 2180 may generate one transfer packet that includes all of time information for opening/closing the shutter glasses of the glasses device in synchronization with the display timing of the first content, time information for opening/closing the shutter glasses of the glasses device in synchronization with the display timing of the second content, ..., and time information for opening/closing the shutter glasses of the glasses device in synchronization with the display timing of the n-th content.

In this case, the interface unit 2180 may generate the transfer packet through matching of information on the glasses devices to the display timing of the respective content. For example, the display device 2100 may match the information of different glasses devices for the respective content according to the arrangement order of the video frames of the content. That is, if two content are provided in a multi-view mode, the first, third, ..., and n-th video frames of the content may be made to match the information of the first glasses device, and the second, fourth, ..., and (n+1)-th video frames of the content may be made to match the information of the second glasses device (here, n is an odd number). Further, the interface unit 2180 may transmit the transfer packet that is generated to include the synchronization signals for the plurality of content to the glasses devices. The glasses device may open/close the shutter glasses using the synchronization signal including the information of the glasses device itself of the synchronization signals for the plurality of content.

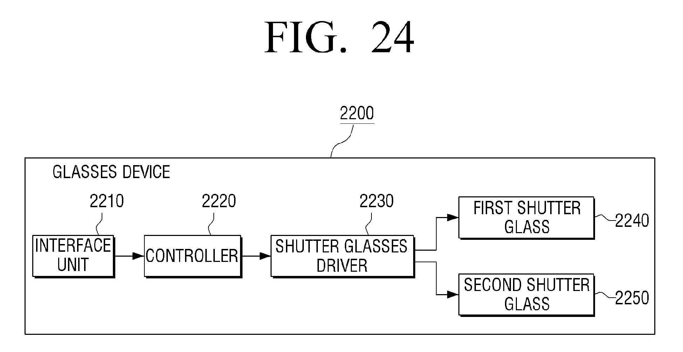

FIG. 24 is a block diagram illustrating the configuration of a glasses device 2200 according to an exemplary embodiment. Since the first and second glasses devices 2200-1 and 2200-2 in FIGS. 16 and 17 have the same configuration, the configuration of one of the glasses devices 2200 is illustrated in FIG. 24. Referring to FIG. 24, the glasses device 2200 includes an interface unit 2210, a controller 2200, a shutter glasses driver 2230, a first shutter glass 2240, and a second shutter glass 2250.

The interface unit 2210 receives the synchronization signal from the display device. The interface unit 2210 may use various communication methods. For example, the interface unit 2210 may perform communications according to various kinds of radio communication standards, such as Bluetooth, WiFi, Zigbee, IEEE, and the like, or according to an RF or IR signal transmission and reception method. The interface unit 2210 may receive the synchronization signal through communications with the display device.

The synchronization signal is a signal for synchronizing the glasses device with the content-view output time point of the display device. As described above, the synchronization signal may be received in the form of a transfer packet according to various communication standards. The transfer packet may include time information for notifying a user of the display timing of the content. Since the information included in the transfer packet has been described with reference to FIG. 23, the duplicate description thereof will be omitted.

The controller 2220 controls the overall operation of the glasses device 2200. In particular, the controller 2220 controls the operation of the shutter glasses driver 2230 through transferring of the synchronization signal received from the interface unit 2210 to the shutter glasses driver 2230. That is, the controller 2220 controls the shutter glasses driver 2230 to generate a driving signal for driving the first shutter glass 2240 and the second shutter glass 2250 on the basis of the synchronization signal. In order to receive the driving signal, the controller 2220 may perform pairing with the display device.

The shutter glasses driver 2230 generates the driving signal based on the synchronization signal received from the controller 2220. The shutter glasses driver 2230 provides the generated driving signal to the shutter glasses 2240 and 2250 to open the first shutter glass 2240 and the second shutter glass 2250 according to the display timing of one of the plurality of content displayed on the display device 2100.

The first shutter glass 2240 and the second shutter glass 2250 opens or closes the shutter glasses according to the driving signal received from the shutter glasses driver 2230.

Specifically, the first shutter glass 2240 and the second shutter glass 2250 simultaneously open the shutter glasses when one of the plurality of content is displayed, and close all the shutter glasses when the other content is displayed. Accordingly, the user who wears the glasses device 2200 can view one content.

In the case of the 3D content, the first shutter glass 2240 and the second shutter glass 2250 alternately open/close the glasses. That is, the first shutter glass 2240 may open at a time when the left-eye image constituting one 3D content is displayed, and the second shutter glass 2250 may open at a time when the right-eye image is displayed according to the driving signal.

In the above-described exemplary embodiment, the display device generates the synchronization signals corresponding to the display timing of the content and transmits the generated synchronization signals to the glasses device 2200. However, this is merely exemplary. That is, the display device may generate and transmit the synchronization signals corresponding to the display timing of the respective content to the glasses device as one transfer packet according to the Bluetooth communication standard.

If the synchronization signal is received, the controller 2220 may confirm the display timing corresponding to the information of the glasses device itself and open or close the shutter glasses according to the confirmed display timing.

In the above-described exemplary embodiment, a communication channel is formed in a short distance and the display device and the glasses device communicate with each other according to various radio communication methods that can transmit and receive signals. However, this is merely exemplary. That is, the display device may provide IR (Infra Red) synchronization signals having different frequencies to the glasses devices, and the glasses device may receive the synchronization signal having a specified frequency and open or close the shutter glasses according to the display timing of the corresponding content.

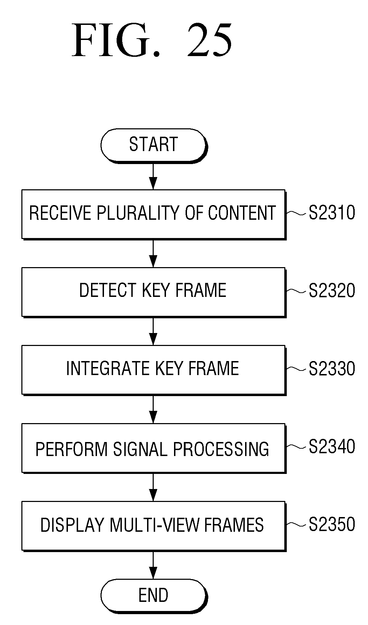

FIG. 25 is a flowchart illustrating a content providing method of a display device according to still another exemplary embodiment.

First, a plurality of content are received (S2310). Specifically, a plurality of content having different frame rates may be received.

Then, respective key frames of the plurality of content are detected (S2320).

For example, if video frames constituting the content are input with the frame rate of 24 frames per second or 30 frames per second, the respective frames may be detected as key frames.

On the other hand, if video frames constituting the content are input with the frame rate of 60 frames per second, the key frames can be detected through extraction of the pull-down type of the input frames. For example, if three sheets of the current frames are repeated and two sheets of the next frames are repeated, it is determined that the input content has been converted into a 3:2 pull-down type, and one of the three repeated frames and one of the two repeated frames are detected as key frames.

The detected key frames are integrated (S2330). Specifically, if the plurality of content have the different numbers of key frames, the numbers of key frames are made to coincide with each other through performing of frame skipping, and the corresponding key frames of the respective content are integrated. In this case, the respective key frames of the plurality of content may be integrated into a top-to-bottom format, a side-by-side format, or a checker board format. Since the corresponding embodiments have been described in detail, the duplicate description thereof will be omitted.

Then, signal processing of the integrated key frames is performed (S2340). That is, motion judder cancelation may be performed through interpolation of the integrated key frames. Specifically, the FRC (Frame Rate Control) is performed to convert the frame rate of the integrated key frames into a frame rate that is displayable on the display device. For example, in the case of the NTSC (National Television System Committee) type, the frame rate that is displayable on the display device 2100 may be 60 frames per second.

In this case, an interpolated frame may be generated through estimation of motions of objects included in the current frame and the next frame from the integrated key frames, the interpolated frame may be inserted between the current frame and the next frame, and the frame rate of the integrated key frames may be converted into the frame rate that is displayable on the display device. On the other hand, the frames, of which the frame rate has been converted, may be separated for the respective content, and upscaling or downscaling of the respective frames may be performed to suit the screen size of the display device using scalers.

Then, the multi-view frames are displayed using the processed key frames (S2350). Specifically, the multi-view frames may be displayed through multiplexing of the video frames of the respective content so that the video frames of the respective content are alternately arranged at least one by one.

For example, in the case of a shutter glasses type display device, the video frames of the first content, the video frames of the second content, ..., and video frames of the n-th content are configured to be alternately arranged at least one by one to be displayed. In this case, if the processed frame rate is 60 frames per second, the respective content are displayed at nx60 Hz, and the user can view the content desired by the user through wearing of a glasses device (not illustrated) that interlocks with the display timing of the content.

On the other hand, in the case of using a plurality of 3D content, the left-eye images and the right-eye images included in the respective 3D content are multiplexed in a predetermined arrangement form, and then are alternately arranged together with the video frames of the other content.

Specifically, in the case where the display device operates at 60 Hz, the left-eye image and the right-eye image of the first content, the left-eye image and the right-eye image of the second content, ..., and the left-eye image and the right-eye image of the n-th content are sequentially arranged and displayed at the driving frequency of 2xnx60 Hz. The user can recognize the left-eye image and the right-eye image of one 3D content through the glasses device.

Further, the content providing method according to the present exemplary embodiment may further include generating the synchronization signal for synchronizing the glasses devices corresponding to the respective content according to the display timing of the respective content, and transmitting the synchronization signal to the glasses devices.

Specifically, the synchronization signal for synchronizing the glasses devices with the display timing of the video frames of one of the plurality of content is generated in a multi-view mode, and the synchronization signal for synchronizing the glasses devices with the display timing of the left-eye video frames and the right-eye video frames of the 3D content is generated in a normal mode.

Further, the corresponding synchronization signal can be transmitted through communications with the glasses devices according to various radio communication methods. Since the transmission of the synchronization signal in the Bluetooth communication method has been described in detail, the duplicate description thereof will be omitted.

As described above, in order to process a plurality of content, the related art provides a large number of components in comparison to a case where one content is processed. Particularly, in order to effectively provide a multi-view, a plurality of display processors may be provided. In this case, much efforts and costs may be used to design SoC provided with a plurality of display processors. In consideration of this point, a display device and method for displaying a plurality of content-views using a plurality of SoC according to still another exemplary embodiment will be described hereinafter.

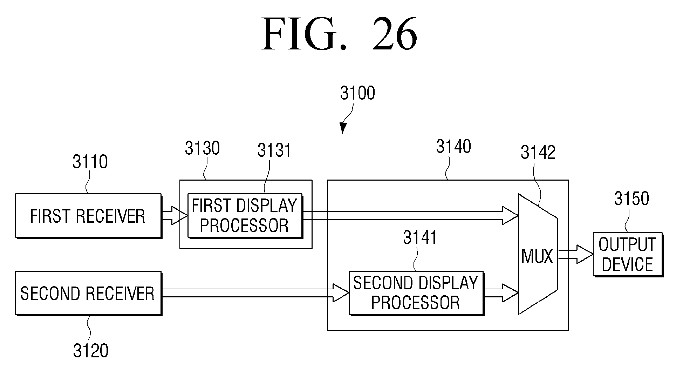

FIG. 26 is a block diagram illustrating the configuration of a display device according to still another exemplary embodiment. The display device 3100 of FIG. 26 may be implemented by a device having a display unit, such as a TV, a mobile phone, a PDA, a notebook PC, a monitor, a tablet PC, an electronic book, a digital photo frame, and/or a kiosk.

Referring to FIG. 26, the display device 3100 includes first and second receivers 3110 and 3120, first and second SoC 3130 and 3140, and an output device 3150.

The first and second receivers 3110 and 3120 receive respective content from different sources. The received content may be 3D content or 3D content. As described above with reference to FIG. 1, the sources may be implemented in various types. Since the operation of the first and second receivers 3110 and 3120 is the same as the operation of the first and second receivers 110 and 120 according to an exemplary embodiment illustrated in FIG. 1, the duplicate description thereof will be omitted.

First SoC 3130 and second SoC 3140 include first and second display processors 3131 and 3141. The first display processor 3131 mounted on the first SoC 3130 processes the content received from the first receiver 3110 and performs various kinds of signal processing with respect to video data in the content. Specifically, the first display processor 3131 can perform processes, such as data decoding, scaling, and frame rate conversion.

The second display processor 3141 mounted on the second SoC 3140 processes the content received from the second receiver 3120 and performs various kinds of signal processing with respect to the video data in the content. Specifically, the second display processor 3141 can perform processes, such as data decoding, scaling, and frame rate conversion.

The data processed by the first display processor 3131 and the second display processor 3141 are output to a MUX 3142 in the second SoC 3140. The MUX 3142 generates data including a plurality of content-views through multiplexing of the respective data. The output device 3150 includes a video output unit that displays the data output from the MUX 3142. For example, in the case of a shutter glasses type display device, the video output unit can display video frames of the first content and the second content that are alternately arranged.

As another example, in the case of a polarization type display device, the video output unit can display frames in which video frames of the respective content are separated by lines and alternately arranged. In the case of the polarization type, a glasses device for viewing 3D content and a glasses device for using a multi-view mode differ from each other. That is, in the glasses device for viewing the 3D content, the polarization directions of the left eye and the right eye differ from each other, and in the glasses device for using the multi-view mode, the polarization directions of the left eye and the right eye are the same.

The output device 3150 may include an audio output unit. The audio output unit modulates audio data that is processed by a separately provided audio signal processing unit (not illustrated) into different radio frequency signals. The radio frequency signals may be output to the respective glasses devices or may be transmitted through an interface unit (not illustrated).

Through this display device, the multi-view mode in which a plurality of 2D content or a plurality of 3D content are combined can be performed.

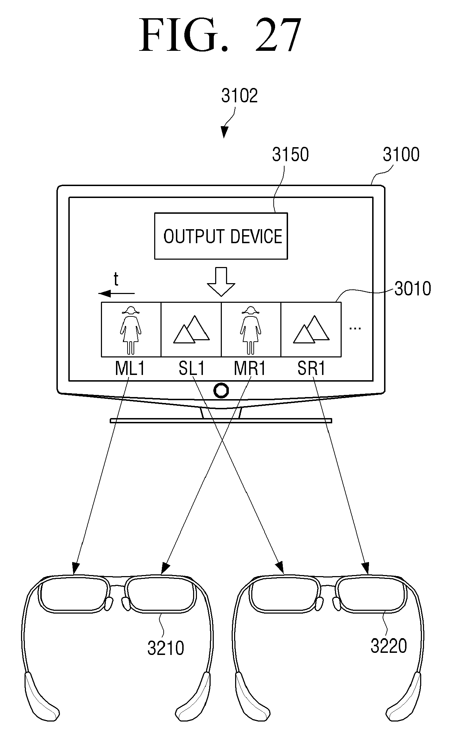

FIG. 27 is a diagram illustrating the operation of a shutter glasses type display apparatus 3102 that receives and displays a plurality of 3D content.

Referring to FIG. 27, the output device 3150 of the display device 3100 displays a plurality of content views 3010 including left-eye images and right-eye images that constitute a plurality of 3D content on the screen. The respective content views 3010 correspond to video frames of the screen size. The apparatus of FIG. 27 is similar to the apparatus illustrated in FIG. 2. However, the signal transmission unit 190 in FIG. 2 is configured to project to the outside of the device, whereas the signal transmission unit 190 in FIG. 27 is implemented to be built in the device. Since the operation of the signal transmission unit in FIG. 27 is similar to the operation of the signal transmission unit in FIG. 2, the duplicate description thereof will be omitted.

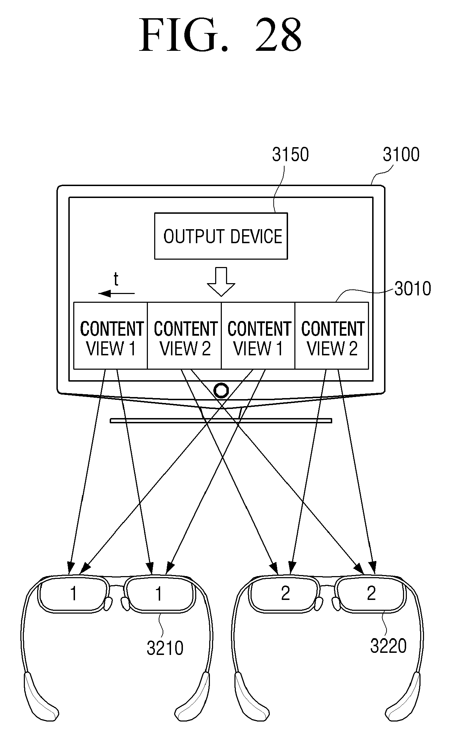

FIG. 28 is a diagram illustrating the operation of a shutter glasses type display device that receives and displays a plurality of 2D content. Referring to FIG. 28, video frames of different content are displayed on the content views 1 and 2. The glasses devices 3210 and 3220 collectively open the left-eye and right-eye glasses at a time when the corresponding content views are output. Referring to FIG. 28, the first glasses device 3210 views the content view 1, and the second glasses device 3220 views the content view 2.

The display device 3100 matches the content views according to the pairing order of the respective glasses devices 3210 and 3220. If the first glasses device 3210 is first paired in a dual-view mode in which two content views are provided, the display device matches the content view 1, and if the second glasses device 3220 is paired thereafter, the display device matches the content view 2.

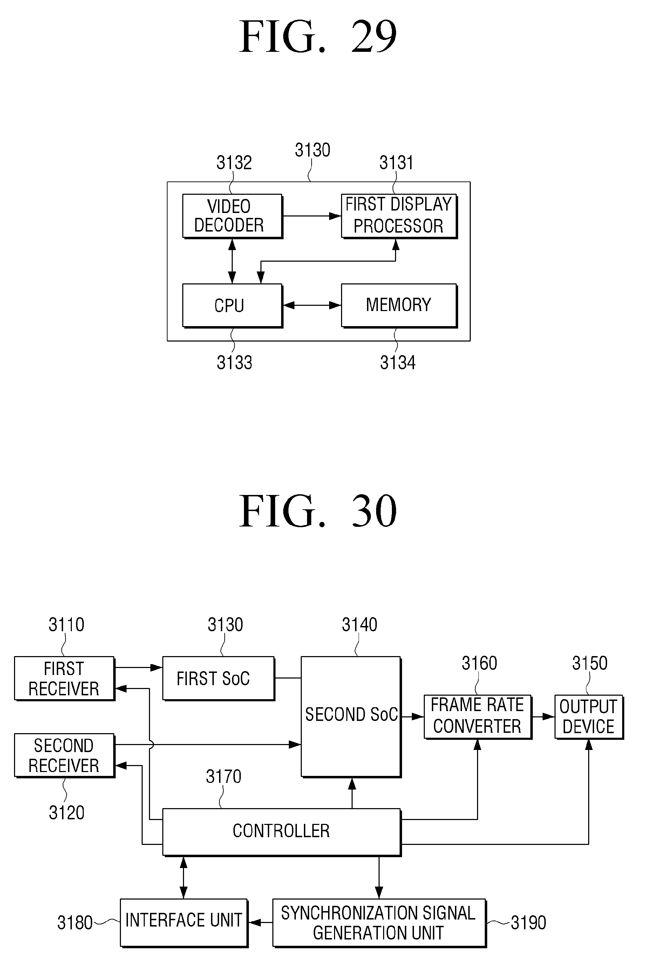

FIG. 29 is a diagram illustrating an example of the configuration of first SoC 3130 that is used in the display device 3100 of FIG. 26. The first SoC 3130 includes a first display processor 3131, a video decoder 3132, a CPU 3133, and a memory 3134.

The video decoder 3132 is configured to decode the video data in the content received by the first receiver 3110. The first display processor 3111 performs processes, such as scaling and frame rate conversion, as described above, with respect to the video data output from the video decoder 3132.

The memory 3134 stores programs and data required for the operation of the first SoC 3130. The CPU 3133 controls the operation of the video decoder 3132 and the first display processor 3131 using the memory 3134.

The first SoC 3130 receives the 3D content through an HDMI port. The first SoC 3130 outputs the data processed by the first display processor 3131 to the second SoC 3140 through a high-speed interface such as LVDS Tx. The second SoC 3140 receives the data through LVDS Rx, and the second display processor 3141 processes the received data. The MUX 3142 multiplexes the respective data and provides the multiplexed data to the output device 3150.

As described above, the display device 3100 can process 2D content or 3D content. Hereinafter, a case of receiving a plurality of 3D content will be described as an example.

FIG. 30 is a block diagram illustrating the detailed configuration of a display device. Referring to FIG. 30, the display device includes first and second receivers 3110 and 3120, first and second SoC 3130 and 3140, a frame rate converter 3160, an output device 3150, a controller 3170, an interface unit 3180, and a synchronization signal generation unit 3190.

The first and second receivers 3130 and 3140 receive 3D content from various sources. The first and second SoC 3130 and 3140 process the respective 3D content. Since the first and second receivers 3110 and 3120 and the first and second SoC 3130 and 3140 have been described in detail with reference to FIG. 26, the duplicate description thereof will be omitted. The frame rate converter 3160 converts the frame rate of the data output from the second SoC 3140. The frame rate converter 3160 may convert the frame rate according to the kind of multi-view mode. That is, the multi-view mode may include various modes, such as a dual-view mode, a triple-view mode, and a quadruple-view mode, according to the number of content views. If the display device 3100 operates at 60Hz in a dual-view mode, the frame rate converter 3160 converts the frame rate of the respective 3D content into 120 Hz.

The interface unit 3180 performs communications with the glasses devices. Specifically, the interface unit 3180 may transmit an audio signal or the synchronization signal to the glasses devices according to various kinds of radio communication standards, such as Bluetooth, WiFi, Zigbee, and IEEE. Further, the interface unit 3180 may be implemented by an IR lamp that emits an IR synchronization signal or an RF transmitter that outputs an RF synchronization signal. In the case where the interface unit 3180 is implemented by the IR lamp or RF transmitter, it may be provided on the exterior of the display device, such as the signal transmission unit 190 in FIG. 2.

The synchronization signal generation unit 3190 generates the synchronization signal for synchronizing the plurality of content views output from the output device 3150 with the plurality of glasses devices and transmits the synchronization signal to the respective glasses devices through the interface unit 3180. The synchronization signal generation unit 3190 may generate the synchronization signal in a format that corresponds to the interface type with the glasses devices. That is, the synchronization signal can be generated in the form of data stream, an RF signal, and an IR signal according to the various kinds of radio communication standards. The synchronization signal generation unit 3190 may be integrally configured with the interface unit 3180.

The controller 3170 controls the overall operation of the display device 3100. The controller 3170 may change the operating mode of the display device 3100 in accordance with a user selection. The user may select one of various operation modes, such as a single-view mode for viewing one content and a multi-view mode for viewing a plurality of content. In the single-view mode, one of 2D content and 3D content is output, and in the multi-view mode, a plurality of content, which are combined as described above, are provided as a plurality of content views. Even if reproduction of the content allocated to one content view is finished and reproduction of the next content starts in the multi-view mode, the content views are maintained as they are.

If a user input a mode switching command while the device operates in the single-view mode, the controller 3170 controls the first and second SoC 3130 and 3140 and the output device 3150 to combine and output the plurality of content. If the mode is switched to the multi-view mode, the controller 3170 controls the synchronization signal generation unit 3190 and the interface unit 3180 to transmit the synchronization signal to the respective glasses devices that match the respective content.

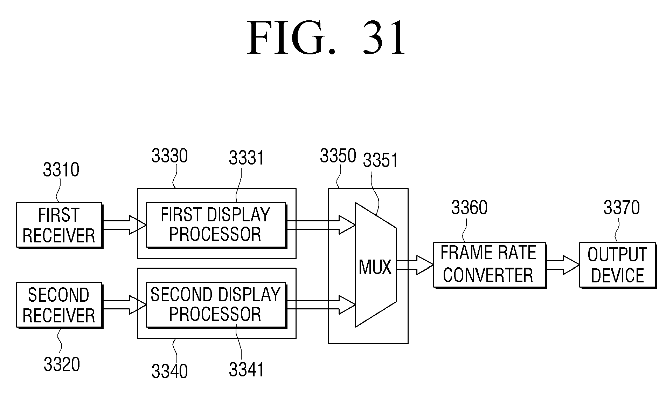

FIG. 31 is a block diagram illustrating the configuration of a display device according to another exemplary embodiment. Referring to FIG. 31, the display device includes first and second receivers 3310 and 3320, a plurality of first, second, and third SoC 3330, 3340, and 3350, a frame rate converter 3360, and an output device 3370.

The first and second receivers 3310 and 3320 may receive various types of content from various sources as described above with reference to FIG. 26.

The first SoC 3330 and the second SoC 3340 include first and second display processors 3331 and 3341, respectively. Further, the third SoC 3350 includes a MUX 3351.

The MUX 3351 multiplexes the data output from the first and second SoC 3330 and 3340 and outputs the multiplexed data to the frame rate converter 3360.

The frame rate converter 3360 converts the frame rate of the data multiplexed by the MUX 3351 and outputs the multiplexed data to the output device 3370.

The output device 3370 outputs a plurality of content views according to the data output from the frame rate converter 3360.

The glasses device illustrated in FIGS. 27 and 28 may have the configuration as illustrated in FIG. 24. That is, the first and second glasses devices 3210 and 3220 may include first and second shutter glasses 2240 and 2250, a shutter glasses driver 2230, a controller 2220, and an interface unit 2210. Since the glasses device has been described in detail with reference to FIG. 24, the duplicate description thereof will be omitted.

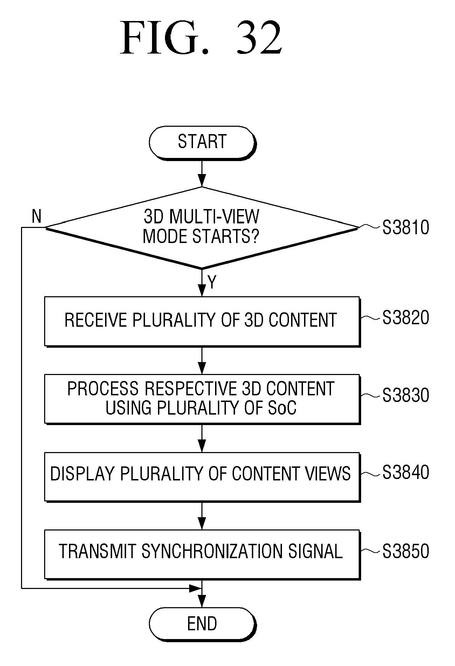

FIG. 32 is a flowchart illustrating a display method according to still another exemplary embodiment. Referring to FIG. 32, if a 3D multi-view mode for receiving and outputting a plurality of 3D content starts (S3810), the plurality of 3D content are received (S3820), and the respective 3D content are processed using a plurality of SoC (S3830).

The step of processing the respective content using the plurality of SoC may multiplex the data processed by the respective SoC using the MUX mounted on one of the plurality of SoC, and convert the frame rate of the multiplexed data.

After the respective 3D content are processed by the plurality of SoC, the data may be multiplexed using the MUX mounted on the separate SoC, and the frame rate of the multiplexed data may be converted.

Accordingly, the plurality of content views are displayed through combination of video frames of the respective 3D content (S3840), and the synchronization signal is transmitted (S3850).

Although not illustrated in FIG. 32, the display method according to this exemplary embodiment may further include performing pairing with the plurality of glasses devices, and sequentially matching the plurality of glasses devices with the plurality of content views according to the pairing order.

As described above, according to exemplary embodiments, a multi-view can be effectively provided through reception of a plurality of content.

Software programs for performing exemplary embodiments as described above may be stored in various types of recording media to be used.

Specifically, such programs may be stored in various types of recording media that can be read by a terminal, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, a memory card, a USB memory, and/or a CD-ROM.

Although a few preferred embodiments have been shown and described, it will be appreciated by those skilled in the art that various changes and modifications might be made without departing from the scope of the invention, as defined in the appended claims.

## Claims

1. A display device(100) comprising:
a plurality of receivers(110, 120) which receives a plurality of contents;
a storage(150);
a plurality of scalers(130, 140) which reduces data sizes of the plurality of contents, stores respective content with the reduced data sizes in the storage(150), and reads the respective content stored in the storage(150) according to an output timing;
a plurality of frame rate converters(160, 170) which converts frame rates of the respective read content; and
a video output device(180) which combines and displays the respective content output from the plurality of frame rate converters(160, 170),
wherein the video output device(180) multiplexes the respective content provided from the plurality of frame rate converters(160, 170) so that the respective content are sequentially arranged according to a predetermined arrangement order, upscales the multiplexed data to suit a screen size, and displays the upscaled data.

2. The display device(100) as claimed in claim 1, wherein the plurality of contents is 3D content that includes left-eye images and right-eye images, and
the plurality of scalers(130, 140) downscales the 3D content, reduces the frame rates, and stores the 3D content with the reduced frame rates.

3. The display device(100) as claimed in claim 1, wherein the plurality of contents is 3D content that includes left-eye images and right-eye images, and
the plurality of scalers(130, 140) downscales and stores the 3D content in the storage(150) and, when respective 3D content stored in the storage(150) are read according to the output timing, reduces the frame rates of the read 3D content, and provides the 3D content with the reduced frame rates to the plurality of frame rate converters(160, 170).

4. The display device(100) as claimed in any of claims 1 to 3, wherein the plurality of contents is 3D content that includes left-eye images and right-eye images,
if the 3D content are 3:2 pull-down film video content, at least one of the plurality of scalers(130, 140) downscales the film video content, extracts key frames only, and stores the key frames in the storage(150), and
when the key frames are read from the storage(150), the plurality of frame rate converters(160, 170) converts the frame rates of the respective 3D content into a multi-content display rate by interpolating frames, based on the read key frames.

5. A multi-content display method of a display device, the method comprising:
receiving a plurality of content including left-eye images and right-eye images;
reducing data sizes of the plurality of content and storing the plurality of content with the reduced data sizes;
converting frame rates of respective stored content; and
combining and displaying the respective content with the converted frame rates,
wherein the combining and displaying comprises:
multiplexing the respective content so that the respective content are sequentially arranged according to a predetermined arrangement order;
upscaling the multiplexed data to suit a screen size; and
displaying the upscaled data.

6. The multi-content display method as claimed in claim 5, wherein the left-eye images and right-eye images are image data of 3D content, and
the reducing the data sizes of the plurality of content comprises:
downscaling the 3D content;
reducing the frame rates of the downscaled 3D content; and
storing the respective 3D content with the reduced frame rates,
wherein the converting the frame rates comprises converting the frame rates of respective 3D content into the multi-content display rate.

7. The multi-content display method as claimed in claim 5 or 6, wherein the left-eye images and right-eye images are included into 3D content, and
the reducing the data sizes of the plurality of content comprises:
if the 3D content are 3:2 pull-down film video content, downscaling the film video content; and
extracting and storing only key frames of the downscaled film video content,
wherein the converting the frame rates comprises converting the frame rates of respective 3D content by interpolating frames, based on the stored key frames.

## Patentansprüche

1. Anzeigevorrichtung (100), die umfasst:
mehrere Empfänger (110, 120), die mehrere Inhalte empfangen;
einen Speicher (150);
mehrere Skalierer (130, 140), die die Datengrößen der mehreren Inhalte vermindern, den jeweiligen Inhalt mit den verminderten Datengrößen in dem Speicher (150) speichern und den jeweiligen Inhalt, der in dem Speicher (150) gespeichert ist, gemäß einer Ausgabezeit lesen;
mehrere Bildfrequenzumsetzer (160, 170), die die Bildwechselfrequenzen des jeweiligen gelesenen Inhalts umsetzen; und
eine Videoausgabevorrichtung (180), die die jeweilige Ausgabe des Inhalts aus den mehreren Bildfrequenzumsetzern (160, 170) kombiniert und anzeigt,
wobei die Videoausgabevorrichtung (180) den jeweiligen Inhalt, der von den mehreren Bildfrequenzumsetzern (160, 170) bereitgestellt wird, derart mehrfach nutzt (multiplext), dass der jeweilige Inhalt entsprechend einer vorgegebenen Anordnungsreihenfolge nacheinander angeordnet ist, die mehrfach genutzten Daten (Multiplex-Daten) hochskaliert, um für eine Bildschirmgröße zu passen, und die hochskalierten Daten anzeigt.

2. Anzeigevorrichtung (100) nach Anspruch 1, wobei die mehreren Inhalte einen 3D-Inhalt darstellen, der Linksaugenbilder und Rechtsaugenbilder enthält, und
wobei die mehreren Skalierer (130, 140) den 3D-Inhalt nach unten skalieren, die Bildwechselfrequenzen vermindern und den 3D-Inhalt mit den verminderten Bildwechselfrequenzen speichern.

3. Anzeigevorrichtung (100) nach Anspruch 1, wobei die mehreren Inhalte einen 3D-Inhalt darstellen, der Linksaugenbilder und Rechtsaugenbilder enthält, und
wobei die mehreren Skalierer (130, 140) den 3D-Inhalt nach unten skalieren und in dem Speicher (150) speichern, und wobei sie dann, wenn der jeweilige 3D-Inhalt, der in dem Speicher (150) gespeichert ist, gemäß der Ausgabezeit gelesen ist, die Bildwechselfrequenzen des gelesenen 3D-Inhalts vermindern und den 3D-Inhalt mit den verminderten Bildwechselfrequenzen den mehreren Bildfrequenzumsetzern (160, 170) bereitstellen.

4. Anzeigevorrichtung (100) nach einem der Ansprüche 1 bis 3, wobei die mehreren Inhalte einen 3D-Inhalt darstellen, der Linksaugenbilder und Rechtsaugenbilder enthält,
wobei dann, wenn der 3D-Inhalt ein Videoinhalt aus einem Film mit einem 3-2-Herunterziehen ist, mindestens einer der mehreren Skalierer (130, 140) den Filmvideoinhalt nach unten skaliert, nur die Schlüsselrahmen extrahiert und die Schlüsselrahmen in dem Speicher (150) speichert, und
wobei dann, wenn die Schlüsselrahmen aus dem Speicher (150) gelesen werden, die mehreren Bildfrequenzumsetzer (160, 170) die Bildwechselfrequenzen des jeweilige 3D-Inhalts auf der Grundlage der gelesenen Schlüsselrahmen in eine Anzeigerate eines vielfachen Inhalts umsetzen, indem Rahmen interpoliert werden.

5. Verfahren einer Anzeigevorrichtung einer vielfachen Inhaltsanzeige, wobei das Verfahren umfasst:
Empfangen mehrerer Inhalte, die Linksaugenbilder und Rechtsaugenbilder enthalten;
Vermindern der Datengrößen der mehreren Inhalte und Speichern der mehreren Inhalte mit den verminderten Datengrößen;
Umsetzen der Bildwechselfrequenzen des jeweiligen gespeicherten Inhalts; und
Kombinieren und Anzeigen des jeweiligen Inhalts mit den umgesetzten Bildwechselfrequenzen, wobei das Kombinieren und Anzeigen umfasst:
mehrfaches Nutzen (Multiplexing) des jeweiligen Inhalts derart, dass der jeweilige Inhalt entsprechend einer vorgegebenen Anordnungsreihenfolge nacheinander angeordnet ist; Hochskalieren der Multiplex-Daten, um für eine Bildschirmgröße zu passen; und Anzeigen der hochskalierten Daten.

6. Verfahren einer vielfachen Inhaltsanzeige nach Anspruch 5, wobei die Linksaugenbilder und Rechtsaugenbilder Bilddaten eines 3D-Inhalts sind, und
wobei das Vermindern der Datengrößen der mehreren Inhalte umfasst:
nach unten Skalieren des 3D-Inhalts;
Vermindern der Bildwechselfrequenzen des nach unten skalierten 3D-Inhalts; und
Speichern des jeweiligen 3D-Inhalts mit den verminderten Bildwechselfrequenzen,
wobei das Umsetzen der Bildwechselfrequenzen das Umsetzen der Bildwechselfrequenzen des jeweiligen 3D-Inhalts in die Anzeigerate eines vielfachen Inhalts umfasst.

7. Verfahren einer vielfachen Inhaltsanzeige nach Anspruch 5 oder 6, wobei die Linksaugenbilder und Rechtsaugenbilder in dem 3D-Inhalt enthalten sind, und
wobei das Vermindern der Datengrößen der mehreren Inhalte umfasst:
nach unten Skalieren des Filmvideoinhalts, wenn der 3D-Inhalt ein Videoinhalt aus einem Film mit einem 3-2-Herunterziehen ist; und
Extrahieren und Speichern nur der Schlüsselrahmen des nach unten skalierten Filmvideoinhalts,
wobei das Umsetzen der Bildwechselfrequenzen ein Umsetzen der Bildwechselfrequenzen des jeweiligen 3D-Inhalts umfasst, indem auf der Grundlage der gespeicherten Schlüsselrahmen Rahmen interpoliert werden.

## Revendications

1. Dispositif d'affichage (100) comprenant :
une pluralité de récepteurs (110, 120) qui reçoivent une pluralité de contenus ;
une mémoire (150) ;
une pluralité de dispositifs de mise à l'échelle (130, 140) qui réduisent les tailles de données de la pluralité de contenus, stockent les contenus respectifs ayant les tailles de données réduites dans la mémoire (150), et lisent les contenus respectifs stockés dans la mémoire (150) conformément à un rythme de sortie ;
une pluralité de convertisseurs de fréquences d'images (160, 170) qui convertissent les fréquences d'images des contenus lus respectifs ; et
un dispositif de sortie vidéo (180) qui combine et affiche les contenus respectifs délivrés en sortie par la pluralité de convertisseurs de fréquences d'images (160, 170),
dans lequel le dispositif de sortie vidéo (180) multiplexe les contenus respectifs fournis par la pluralité de convertisseurs de fréquences d'images (160, 170) de façon que les contenus respectifs soient arrangés en séquence en fonction d'un ordre d'arrangement prédéterminé, met à plus grande échelle les données multiplexées pour qu'elles s'adaptent à la taille d'un écran, et affiche les données mises à plus grande échelle.

2. Dispositif d'affichage (100) selon la revendication 1, dans lequel la pluralité de contenus est constituée de contenus 3D qui comprennent des images pour l'oeil gauche et des images pour l'oeil droit, et
la pluralité de dispositifs de mise à l'échelle (130, 140) mettent à plus petite échelle les contenus 3D, réduisent les fréquences d'images, et stockent les contenus 3D avec les fréquences d'images réduites.

3. Dispositif d'affichage (100) selon la revendication 1, dans lequel la pluralité de contenus est constituée de contenus 3D qui comprennent des images pour l'oeil gauche et des images pour l'oeil droit, et
la pluralité de dispositifs de mise à l'échelle (130, 140) mettent à plus petite échelle et stockent les contenus 3D dans la mémoire (150) et, quand les contenus 3D respectifs stockés dans la mémoire (150) sont lus conformément au rythme de sortie, réduisent les fréquences d'images des contenus 3D lus, et fournissent les contenus 3D avec les fréquences d'images réduites à la pluralité de convertisseurs de fréquences d'images (160, 170).

4. Dispositif d'affichage (100) selon l'une quelconque des revendications 1 à 3, dans lequel la pluralité de contenus est constituée de contenus 3D qui comprennent des images pour l'oeil gauche et des images pour l'oeil droit,
si les contenus 3D sont des contenus vidéo de film utilisant une conversion 3:2 pull-down, au moins l'un parmi la pluralité de dispositifs de mise à l'échelle (130, 140) met à plus petite échelle le contenu vidéo de film, extrait les trames clés uniquement, et stocke les trames clés dans la mémoire (150), et
quand les trames clés sont lues depuis la mémoire (150), la pluralité de convertisseurs de fréquences d'images convertit les fréquences d'images des contenus 3D respectifs en une fréquence d'affichage de contenus multiples par interpolation de trames, sur la base des trames clés lues.

5. Procédé d'affichage de contenus multiples d'un dispositif d'affichage, le procédé comprenant :
la réception d'une pluralité de contenus comprenant des images pour l'oeil gauche et des images pour l'oeil droit ;
la réduction des tailles de données de la pluralité de contenus et le stockage de la pluralité de contenus avec des tailles de données réduites ;
la conversion de fréquences d'images des contenus stockés respectifs ; et
la combinaison et l'affichage des contenus respectifs avec les fréquences d'images converties,
dans lequel la combinaison et l'affichage comprennent :
le multiplexage des contenus respectifs de façon que les contenus respectifs soient arrangés en séquence en fonction d'un ordre d'arrangement prédéterminé ;
la mise à plus grande échelle des données multiplexées pour qu'elles s'adaptent à la taille d'un écran ; et
l'affichage des données mises à plus grande échelle.

6. Procédé d'affichage de contenus multiples selon la revendication 5, dans lequel les images pour l'oeil gauche et les images pour l'oeil droit sont des données d'images de contenus 3D, et
la réduction des tailles de données de la pluralité de contenus comprend :
la mise à plus petite échelle des contenus 3D ;
la réduction des fréquences d'images des contenus 3D mis à plus petite échelle ; et
le stockage des contenus 3D respectifs avec les fréquences d'images réduites,
dans lequel la conversion des fréquences d'images comprend la conversion des fréquences d'images des contenus 3D respectifs en la fréquence d'affichage de contenus multiples.

7. Procédé d'affichage de contenus multiples selon la revendication 5 ou 6, dans lequel les images pour l'oeil gauche et les images pour l'oeil droit sont incluses dans des contenus 3D, et
la réduction des tailles de données de la pluralité de contenus comprend :
si les contenus 3D sont des contenus vidéo de film utilisant une conversion 3:2 pull-down, la mise à plus petite échelle des contenus vidéo de film ; et
l'extraction et le stockage uniquement des trames clés des contenus vidéo de film mis à plus petite échelle,
dans lequel la conversion des fréquences d'images comprend la conversion des fréquences d'images des contenus 3D respectifs par interpolation de trames, sur la base des trames clés stockées.
